# EUROPEAN PATENT APPLICATION

(11) **EP 4 518 448 A1**
(43) Date of publication of application: **05.03.2025**
(21) Application number: 23795362.5
(22) Date of filing: 24.04.2023
(51) Int. Cl.: H04W 52/02

(54) **SIGNAL SENDING METHOD, COMMUNICATION APPARATUS, SIGNAL SENDING APPARATUS AND STORAGE MEDIUM**

(30) Priority: 29.04.2022 CN 202210476506
(71) Applicant: Datang Mobile Communications Equipment Co., Ltd., Beijing 100085 (CN)
(72) Inventor: SU, Yuwan, Beijing 100085 (CN); WANG, Jiaqing, Beijing 100085 (CN); CHENG, Fangzhen, Beijing 100085 (CN); YANG, Meiying, Beijing 100085 (CN); LUO, Chen, Beijing 100085 (CN); LI, Yaomin, Beijing 100085 (CN)
(74) Representative: Studio Torta S.p.A.
(86) International application number: PCT/CN2023/090445
(87) International publication number: WO 2023/207929

(57) **Abstract**

The present application relates to the technical field of wireless communications. Disclosed are a signal sending method, a communication apparatus, a signal sending apparatus and a storage medium. The specific implementation solution comprises: sending first indication information to a second wireless communication node in a first state, wherein the first state is one of a deactivated state, a turned-off state and an unable-to-communicate state, and the first indication information is used for indicating that the second wireless communication node sends a first signal.

## Description

### CROSS REFERENCE TO RELATED APPLICATIONS

This application is based on and claims priority to Chinese patent application No. 202210476506.4, filed on April 29, 2022, the entire contents of which are incorporated herein by reference.

### TECHNICAL FIELD

The invention relates to a field of wireless communication technology, in particular to a method for sending a signal, a communication apparatus, an apparatus for sending a signal and a storage medium.

### BACKGROUND

Network energy saving is a main indicator of the operator's operating expense. According to the operating expense data of the operator, the operating expense of energy consumption in a mobile network accounts for about 1/4 of the total operating expense, and most of the energy consumption comes from a wireless access network.

Therefore, how to reduce the energy consumption of the wireless network is an urgent problem to be solved.

### SUMMARY

The invention provides a method for sending a signal, a communication apparatus, an apparatus for sending a signal and a storage medium.

According to a first aspect of the invention, a method for sending a signal, performed by a first wireless communication node, is provided. The method includes: sending first indication information to a second wireless communication node in a first state, in which the first state is one of a deactivated state, a closed state, or an incommunicable state, and the first indication information is configured to instruct the second wireless communication node to send a first signal.

In some embodiments, sending the first indication information to the second wireless communication node in the first state includes: sending the first indication information to the second wireless communication node in the first state according to first reference information; the first reference information includes at least one of following: location information of a terminal device connected to the first wireless communication node; a first result of signal measurement of the terminal device; grade indication information corresponding to the first result; or switching probability indication information of the terminal device.

In some embodiments, in a case where the first reference information includes the first result, the method further includes: receiving the first result, in which the first result is obtained by measuring a second signal sent by the first wireless communication node.

In some embodiments, the method for sending a signal includes: sending a first threshold to the terminal device, in which in response to determining that the first result is greater than or equal to the first threshold, the terminal device sends the first result to the first wireless communication node; or in response to determining that the first result is less than or equal to the first threshold, the terminal device sends the first result to the first wireless communication node.

In some embodiments, in a case where the first reference information includes the first result, the method further includes: obtaining the first result by measuring an uplink signal sent by the terminal device.

The second signal includes at least one of a synchronization signal block (SSB), a channel state information reference signal (CSI-RS) or a positioning reference signal (PRS).

The uplink signal includes a sounding reference signal (SRS).

The first result is used to indicate at least one of a signal to interference plus noise ratio (SINR), a reference signal receiving power (RSRP), a reference signal receiving quality (RSRQ) or a received signal strength indication (RSSI).

In some embodiments, in a case where the first reference information includes the first result, sending the first indication information to the second wireless communication node in the first state according to the first reference information includes: in response to a first result corresponding to at least one terminal device being less than or equal to a second threshold, and/or, a number of terminal devices whose first results are less than or equal to the second threshold being greater than or equal to a first number, sending the first indication information to the second wireless communication node.

In some embodiments, in a case where the first reference information includes the location information, the method further includes: determining the location information of the terminal device by positioning the terminal device; and/or receiving the location information sent by the terminal device; and/or receiving the location information sent by a network element for positioning the terminal device.

In some embodiments, the location information includes at least one of following: coordinate information of the terminal device; relative coordinate information of the terminal device with respect to a first reference point; distance information of the terminal device with respect to the first reference point; or direction information of the terminal device with respect to the first reference point.

In some embodiments, the first reference point is at least one of a reference terminal device, a reference wireless communication node or the first wireless communication node.

In some embodiments, the method further includes: sending location information of the first reference point to the terminal device, in which the location information of the first reference point is configured to indicate a location where the first reference point is located, and/or, a second location range covered by the first reference point.

In some embodiments, the method further includes: sending a first location range to the terminal device, in which the first location range is a first coordinate range, in which the location information is sent to the first wireless communication node in response to determining that a coordinate of the terminal device is within or outside the first coordinate range; or the first location range is a first relative coordinate range, in which the location information is sent to the first wireless communication node in response to determining that a relative coordinate of the terminal device with respect to the first reference point is within or outside the first relative coordinate range; or the first location range is a first distance, in which the location information is sent to the first wireless communication node in response to determining that a distance of the terminal device with respect to the first reference point is less than or equal to the first distance; or the first location range is a first distance, in which the location information is sent to the first wireless communication node in response to determining that the distance of the terminal device with respect to the first reference point is greater than or equal to the first distance.

In some embodiments, sending the first indication information to the second wireless communication node in the first state according to the first reference information, includes: in response to determining, according to the location information of the terminal device, that a distance between at least one terminal device and the first wireless communication node is greater than or equal to a distance threshold according to the location information of the terminal device, and/or that a number of terminal devices whose distances to the first wireless communication node are greater than or equal to the distance threshold is greater than or equal to a second number, sending the first indication information to the second wireless communication node; and/or in response to determining, according to the location information of the terminal device, that at least one terminal device is not within a second location range, and/or that a number of terminal devices that are not within the second location range is greater than a third number, sending the first indication information to the second wireless communication node.

In some embodiments, in a case where the first reference information includes the grade indication information, the method further includes: determining the grade indication information according to a result range corresponding to the first result of the terminal device, and/or, according to a distance range corresponding to a distance between the terminal device and the first wireless communication node.

In some embodiments, in a case where the first reference information includes the grade indication information of the terminal device, the method further includes: receiving the grade indication information sent by the terminal device, in which the grade indication information is determined according to the result range corresponding to the first result of the terminal device, and/or, according to the distance range corresponding to the distance between the terminal device and the first wireless communication node.

In some embodiments, the method further includes: sending a first grade threshold to the terminal device, in which the first grade threshold is used for the terminal device to send the grade indication information to the first wireless communication node in a case where the grade indication information is less than or equal to the first grade threshold, or the first grade threshold is used for the terminal device to send the grade indication information to the first wireless communication node in a case where the grade indication information is greater than or equal to the first grade threshold.

In some embodiments, the first reference information includes the grade indication information of the terminal device, and sending the first indication information to the second wireless communication node in the first state according to the first reference information, includes: in response to a grade corresponding to the first result of at least one terminal device being less than or equal to a second grade threshold, and/or, a number of terminal devices whose grades are less than or equal to the second grade threshold being greater than a fourth number, sending the first indication information to the second wireless communication node in the first state.

In some embodiments, in a case where the first reference information includes the switching probability indication information, the method further includes: determining the switching probability indication information according to the first result of the terminal device, and/or, according to the location information of the terminal device, and/or, according to the grade indication information of the terminal device.

In some embodiments, in a case where the first reference information includes the switching probability indication information of the terminal device, the method further includes: receiving the switching probability indication information sent by the terminal device, in which the switching probability indication information is determined according to the first result of the terminal device, and/or, according to the location information of the terminal device, and/or, according to the grade indication information of the terminal device.

In some embodiments, the method further includes: sending a first probability threshold to the terminal device, in which the first probability threshold is used for the terminal device to send the switching probability indication information to the first wireless communication node in response to determining that a switching probability of the terminal device is greater than or equal to the first probability threshold, or the first probability threshold is used for the terminal device to send the switching probability indication information to the first wireless communication node in response to determining that the switching probability is less than or equal to the first probability threshold.

In some embodiments, in a case where the first reference information includes the switching probability indication information of the terminal device, sending the first indication information to the second wireless communication node in the first state according to the first reference information, includes: in response to a switching probability of at least one terminal device being greater than or equal to a second probability threshold, or, a number of terminal devices whose switching probabilities are greater than or equal to the second probability threshold being greater than or equal a fifth number, sending the first indication information to the second wireless communication node in the first state.

In some embodiments, the method further includes: sending first resource configuration information of the first signal to the second wireless communication node and the terminal device, in which the first resource configuration information is used for determining a resource occupied by the first signal.

In some embodiments, the method further includes: receiving second resource configuration information of the first signal sent by the second wireless communication node; and sending the second resource configuration information of the first signal to the terminal device, in which the second resource configuration information is used for determining a resource occupied by the first signal.

In some embodiments, the method further includes: sending second indication information to the second wireless communication node according to second reference information, in which the second indication information is configured to indicate that the second wireless communication node is in a second state, and the second state is one of an activated state, an open state or a communicative state. The second reference information includes at least one of following: a first result of signal measurement of the terminal device; grade indication information corresponding to the first result; a second result obtained by measuring the first signal by the terminal device; grade indication information corresponding to the second result; switching probability indication information indicating a switching probability of the terminal device switching to the second wireless communication node; or location information of the terminal device.

According to a second aspect of the invention, a method for sending a signal, performed by a second wireless communication node, is provided. The method includes: receiving first indication information sent by a first wireless communication node to the second wireless communication node in a first state; and in response to the first indication information, sending a first signal, in which the first state is one of a deactivated state, a closed state, or an incommunicable state.

In some embodiments, the first indication information is sent according to first reference information. The first reference information includes at least one of following: location information of a terminal device connected to the first wireless communication node; a first result of signal measurement of the terminal device; grade indication information corresponding to the first result; or switching probability indication information of the terminal device.

In some embodiments, the method further includes: receiving first resource configuration information of the first signal sent by the first wireless communication node; and sending the first signal according to a resource indicated by the first resource configuration information.

In some embodiments, the method further includes: sending second resource configuration information to the first wireless communication node according to a resource of the first signal, in which the second resource configuration information is for determining the resource occupied by the first signal.

In some embodiments, the method further includes: receiving second indication information sent by the first wireless communication node, in which in response to the second indication information, the second wireless communication node is in a second state, and the second state is one of an activated state, an open state or a communicative state.

In some embodiments, the second indication information is sent according to second reference information. The second reference information includes at least one of following: a first result of signal measurement of the terminal device; grade indication information corresponding to the first result; a second result obtained by measuring the first signal by the terminal device; grade indication information corresponding to the second result; switching probability indication information indicating a switching probability of the terminal device switching to the second wireless communication node; or location information of the terminal device.

According to a third aspect of the invention, a method for sending a signal, performed by a terminal device connected to a first wireless communication node, is provided. The method includes: receiving a first signal sent by a second wireless communication node in a first state, in which the first signal is sent in response to first indication information of the first wireless communication node.

In some embodiments, the first indication information is sent by the first wireless communication node according to first reference information. The first reference information includes at least one of the following: location information of the terminal device; a first result of signal measurement of the terminal device; grade indication information corresponding to the first result; or switching probability indication information of the terminal device.

In some embodiments, in a case where the first reference information includes the first result, the method further includes: obtaining the first result by measuring a second signal sent by the first wireless communication node; and sending the first result to the first wireless communication node.

In some embodiments, sending the first result to the first wireless communication node, includes: in response to determining that the first result is greater than or equal to a first threshold, sending the first result to the first wireless communication node; or, in response to determining that the first result is less than or equal to the first threshold, sending the first result to the first wireless communication node.

In some embodiments, the method further includes: receiving the first threshold sent by the first wireless communication node.

In some embodiments, in a case where the first reference information includes the first result, the method further includes: sending an uplink signal to the first wireless communication node, in which the uplink signal is measured by the first wireless communication node to obtain the first result.

In some embodiments, the second signal includes at least one of an SSB, a CSI-RS or a PRS.

In some embodiments, the first result is used to indicate at least one of an SINR, a RSRP, an RSRQ or an RSSI.

In some embodiments, in a case where the first reference information includes the location information, the method further includes: sending the location information of the terminal device to the first wireless communication node.

In some embodiments, the location information includes at least one of the following: coordinate information of the terminal device; relative coordinate information of the terminal device with respect to a first reference point; distance information of the terminal device with respect to the first reference point; or direction information of the terminal device with respect to the first reference point.

In some embodiments, the first reference point is at least one of a reference terminal device, a reference wireless communication node or the first wireless communication node.

In some embodiments, the method includes: receiving location information of the first reference point sent by the first wireless communication node, in which the location information of the first reference point is configured to indicate a location where the first reference point is located and/or a second location range covered by the first reference point.

In some embodiments, sending the location information of the terminal device to the first wireless communication node, includes: sending the location information of the terminal device to the first wireless communication node according to a first location range, in which the first location range is a first coordinate range, in which the location information is sent to the first wireless communication node in response to determining that a coordinate of the terminal device is within or outside the first coordinate range; or the first location range is a first relative coordinate range, in which the location information is sent to the first wireless communication node in response to determining that a relative coordinate of the terminal device with respect to the first reference point is within or outside the first relative coordinate range; or the first location range is a first distance, in which the location information is sent to the first wireless communication node in response to determining that a distance of the terminal device with respect to the first reference point is less than or equal to the first distance; or the first location range is a first distance, in which the location information is sent to the first wireless communication node in response to determining that the distance of the terminal device with respect to the first reference point is greater than or equal to the first distance.

In some embodiments, the method further includes: receiving a first location range sent by the first wireless communication node.

In some embodiments, in a case where the first reference information includes the grade indication information, the method further includes: determining the grade indication information according to a result range corresponding to the first result of the terminal device, and/or, according to a distance range corresponding to a distance between the terminal device and the first wireless communication node; and sending the grade indication information to the first wireless communication node.

In some embodiments, sending the grade indication information to the first wireless communication node, includes: in response to the grade indication information being less than or equal to a first grade threshold, sending the grade indication information to the first wireless communication node; or in response to the grade indication information being greater than or equal to the first grade threshold, sending the grade indication information to the first wireless communication node.

In some embodiments, the method further includes: receiving the first grade threshold sent by the first wireless communication node.

In some embodiments, in a case where the first reference information includes the switching probability indication information, the method further includes: determining the switching probability indication information according to the first result of the terminal device, and/or, according to the location information of the terminal device, and/or, according to the grade indication information of the terminal device; and sending the switching probability indication information to the first wireless communication node.

In some embodiments, sending the switching probability indication information to the first wireless communication node, includes: in response to determining that the switching probability indication information is greater than or equal to a first probability threshold, sending the switching probability indication information to the first wireless communication node; or in response to determining that the switching probability indication information is less than or equal to the first probability threshold, sending the switching probability indication information to the first wireless communication node.

In some embodiments, the method further includes: receiving the first probability threshold sent by the first wireless communication node.

In some embodiments, the method further includes: receiving first resource configuration information configured by the first wireless communication node for the first signal. Receiving the first signal sent by the second wireless communication node in the first state includes: receiving the first signal sent by the second wireless communication node in the first state according to the first resource configuration information.

In some embodiments, the method further includes: receiving second resource configuration information of the first signal sent by the first wireless communication node, in which the second resource configuration information is resource configuration information sent by the second wireless communication node to the first wireless communication node; and receiving the first signal sent by the second wireless communication node in the first state according to the second resource configuration information.

In some embodiments, the method further includes: sending second reference information to the first wireless communication node, in which the second reference information is used for sending second indication information to the second wireless communication node, the second indication information is configured to indicate that the second wireless communication node is in a second state, and the second state is one of an activated state, an open state, or a communicative state. The second reference information includes at least one of following: a first result of signal measurement of the terminal device; grade indication information corresponding to the first result; a second result obtained by measuring the first signal by the terminal device; grade indication information corresponding to the second result; switching probability indication information indicating a switching probability of the terminal device switching to the second wireless communication node; or location information of the terminal device.

According to a fourth aspect of the invention, a communication apparatus including a memory, a transceiver and a processor, is provided. The memory is configured to store computer programs, the transceiver is configured to transmit and receive data under the control of the processor, and the processor is configured to read the computer programs stored in the memory and perform the following operation: sending first indication information to a second wireless communication node in a first state, in which the first state is one of a deactivated state, a closed state, and an incommunicable state, or the first indication information is configured to instruct the second wireless communication node to send a first signal.

In some embodiments, sending the first indication information to the second wireless communication node in the first state, includes: sending the first indication information to the second wireless communication node in the first state according to first reference information. The first reference information includes at least one of following: location information of a terminal device connected to the first wireless communication node; a first result of signal measurement of the terminal device; grade indication information corresponding to the first result; or switching probability indication information of the terminal device.

According to a fifth aspect of the invention, a communication apparatus including a memory, a transceiver and a processor, is provided. The memory is configured to store computer programs, the transceiver is configured to transmit and receive data under the control of the processor, and the processor is configured to read the computer programs stored in the memory and perform the following operations: receiving first indication information sent by a first wireless communication node to a second wireless communication node in a first state; and in response to the first indication information, sending a first signal, in which the first state is one of a deactivated state, a closed state, or an incommunicable state.

In some embodiments, the first indication information is sent according to first reference information. The first reference information includes at least one of following: location information of a terminal device connected to the first wireless communication node; a first result of signal measurement of the terminal device; grade indication information corresponding to the first result; or switching probability indication information of the terminal device.

According to a sixth aspect of the invention, a communication apparatus including a memory, a transceiver and a processor, is provided. The memory is configured to store computer programs, the transceiver is configured to transmit and receive data under the control of the processor, and the processor is configured to read the computer programs stored in the memory and perform the following operation: receiving a first signal sent by a second wireless communication node in a first state, in which the first signal is sent in response to first indication information of a first wireless communication node.

In some embodiments, the first indication information is sent by the first wireless communication node according to first reference information. The first reference information includes at least one of following: location information of a terminal device connected to the first wireless communication node; a first result of signal measurement of the terminal device; grade indication information corresponding to the first result; or switching probability indication information of the terminal device.

According to a seventh aspect of the invention, an apparatus for sending a signal is provided. The apparatus includes: a first sending unit, configured to send first indication information to a second wireless communication node in a first state, in which the first state is one of a deactivated state, a closed state, or an incommunicable state, and the first indication information is configured to instruct the second wireless communication node to send a first signal.

According to an eighth aspect of the invention, an apparatus for sending a signal is provided. The apparatus includes: a first receiving unit, configured to receive first indication information sent by a first wireless communication node to a second wireless communication node in a first state, and a second sending unit, configured to, in response to the first indication information, send a first signal, in which the first state is one of a deactivated state, a closed state, or an incommunicable state.

According to a ninth aspect of the invention, an apparatus for sending a signal is provided. The apparatus includes: a second receiving unit, configured to receive a first signal sent by a second wireless communication node in a first state, in which the first signal is sent in response to first indication information of the first wireless communication node.

According to a tenth aspect of the invention, a processor-readable storage medium having computer programs stored thereon is provided. The computer programs are used to cause a processor to execute the method of the first aspect, the method of the second aspect, or the method of the third aspect.

According to an eleventh aspect of the invention, a computer program product including computer programs is provided. When the computer programs are executed by a processor, the method of the first aspect, the method of the second aspect, or the method of the third aspect is implemented.

According to a twelfth aspect of the invention, a computer device including a processor and a memory is provided. The processor reads computer programs stored in the memory to implement the method of the first aspect, the method of the second aspect, or the method of the third aspect.

With the method for sending a signal, the communication apparatus, the apparatus for sending a signal and the storage medium provided in the embodiments of the invention, the first wireless communication node sends the first indication information to the second wireless communication node in the first state, in which the first state is one of a deactivated state, a closed state, or an incommunicable state, and the first indication information is used to instruct the second wireless communication node to send a first signal. In the way, the first wireless communication node sends the first indication information that is used to instruct the second wireless communication node to send the first signal to the second wireless communication node in the deactivated state, the closed state, or the incommunicable state, so that the second wireless communication node sends the first signal again according to the first indication information, instead of periodically sending the first signal, which reduces the energy consumption of the wireless network.

It should be understood that the content described in this section is not intended to identify key or important features of the embodiments of the invention, nor is it intended to limit the scope of the invention. Additional features of the invention will be easily understood based on the following description.

### BRIEF DESCRIPTION OF THE DRAWINGS

The drawings are used to better understand the solution and do not constitute a limitation to the invention, in which:
FIG. 1 is a flowchart of a method for sending a signal according to an embodiment of the invention.
FIG. 2 is a flowchart of a method for sending a signal according to an embodiment of the invention.
FIG. 3 is a flowchart of a method for sending a signal according to embodiment 1 of the invention.
FIG. 4 is a flowchart of another method for sending a signal according to embodiment 1 of the invention.
FIG. 5 is a flowchart of another method for sending a signal according to embodiment 1 of the invention.
FIG. 6 is a schematic diagram of a signal method according to embodiment 1 of the invention.
FIG. 7 is a flowchart of a method for sending a signal according to embodiment 2 of the invention.
FIG. 8 is a schematic diagram of a signal method according to embodiment 2 of the invention.
FIG. 9 is a flowchart of a method for sending a signal according to embodiment 3 of the invention.
FIG. 10 is a schematic diagram of a signal method according to embodiment 3 of the invention.
FIG. 11 is a flowchart of a method for sending a signal according to embodiment 4 of the invention.
FIG. 12 is a flowchart of a method for sending a signal according to an embodiment of the invention.
FIG. 13 is a flowchart of a method for sending a signal according to an embodiment of the invention.
FIG. 14 is a flowchart of another method for sending a signal according to an embodiment of the invention.
FIG. 15 is a flowchart of a method for sending a signal according to an embodiment of the invention.
FIG. 16 is a flowchart of a method for sending a signal according to an embodiment of the invention.
FIG. 17 is a block diagram of a communication apparatus according to an embodiment of invention.
FIG. 18 is a block diagram of another communication apparatus according to an embodiment of invention.
FIG. 19 is a block diagram of another communication apparatus according to an embodiment of invention.
FIG. 20 is a block diagram of an apparatus for sending a signal according to an embodiment of the invention.
FIG. 21 is a block diagram of an apparatus for sending a signal according to an embodiment of the invention.
FIG. 22 is a block diagram of an apparatus for sending a signal according to an embodiment of the invention.

### DETAILED DESCRIPTION

The term "and/or" in the embodiments of the invention describes an association relation between associated objects and indicates three relations. For example, A and/or B indicates the following three cases, i.e., A exists alone, A and B both exist, and B exists alone. The character "/" generally indicates that the associated objects before and after "/" is in an "or" relation.

The term "a plurality of" in the embodiments of the invention refers to two or more, which is the similar for other quantifiers.

The technical solutions in the embodiments of the invention will be described clearly and completely below in combination with the accompanying drawings in the embodiments of the invention. Clearly, the described embodiments are only a part of the embodiments of the invention, and not all of the embodiments. Based on the embodiments of the invention, other embodiments obtained by those skilled in the art without inventive works all fall within the scope of protection of the invention.

Network energy saving is a main indicator of the operator's operating expense (OPEX). According to data of the operator, the OPEX of energy consumption in a mobile network accounts for about 1/4 of the total OPEX. Most of the energy consumption comes from a wireless access network, especially active antenna unit (AAU). Currently, the energy consumption of a 5G network is about 2 to 3 times that of a 4G network, so researches on energy-saving technologies for the energy consumption of 5G network are needed.

To address this problem, the network energy saving researches mainly focus on various technologies that facilitate the network device in reducing energy consumption. Base station on/off (switching between on and off) technology is one of the main technologies, which reduces the energy consumption of a communication node by shutting down the base station when necessary.

When a base station is in a closed state, the network device periodically sends a discovery reference signal (DRS), which may generate energy consumption of the communication node.

Therefore, in order to solve the above problems, the invention proposes a method for sending a signal, a communication apparatus, an apparatus for sending a signal and a storage medium. The method can reduce the energy consumption of the network device in a deactivated state, a closed state, or an incommunicable state. Since the method and the apparatus are based on the same application concept, the method and the apparatus solve the problem based on similar principles, the embodiments of the apparatus can be referred to the embodiments of the method and will not be repeated herein.

A method for sending a signal, a communication apparatus, an apparatus for sending a signal and a storage medium provided by the invention are described in detail below with reference to the accompanying drawings.

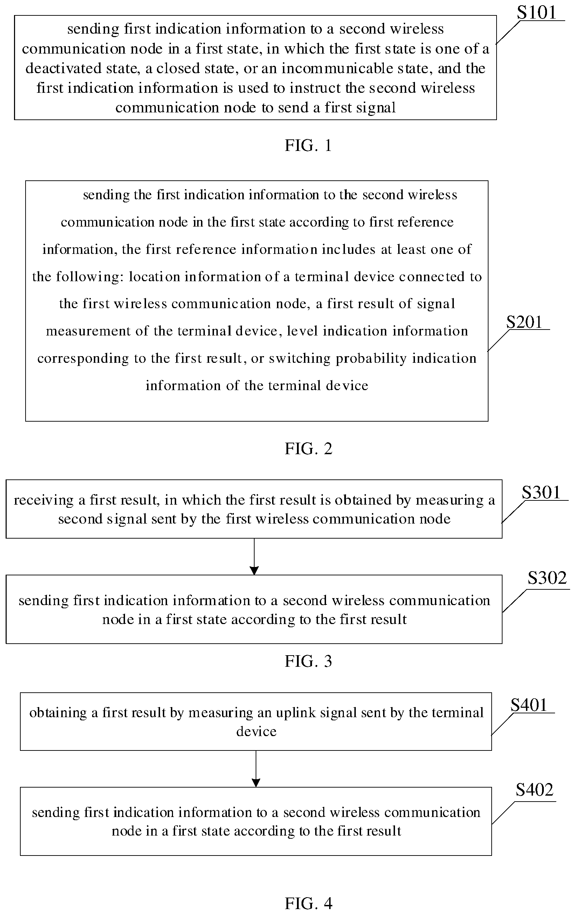

FIG. 1 is a flowchart of a method for sending a signal according to an embodiment of the invention.

The method for sending a signal of the embodiment of the invention is performed by a first wireless communication node.

The first wireless communication node is at least one of a first network device, a first cell or a first carrier. In the invention, the specific name or existence form of the first wireless communication node can be selected according to the actual needs.

As illustrated in FIG. 1, the method for sending a signal of the embodiment of the invention includes a step S101.

At step S101, first indication information is sent to a second wireless communication node in a first state, in which the first state is one of a deactivated state, a closed state, or an incommunicable state, and the first indication information is used to instruct the second wireless communication node to send a first signal.

The first state may also be a state other than the deactivated state, the closed state, and the incommunicable state. The second wireless communication node in such state cannot communicate normally with the terminal device. For example, the second wireless communication node cannot send a terminal-level physical downlink control channel (PDCCH), or it cannot send a terminal-level physical downlink shared channel (PDSCH). The specific name or existence form of the first state in the invention can be selected according to the actual needs.

The second wireless communication node is at least one of a second network device, a second cell or a second carrier. The specific name or existence form of the second wireless communication node in the invention may be selected according to the actual needs.

For example, the first indication information may include at least 1 bit.

If the value of this bit is 1, it indicates that the second wireless communication node is instructed to send the first signal. If the value of this bit is 0, it indicates that the second wireless communication node is instructed not to send the first signal. Or, if the value of this bit is 1, it indicates that the second wireless communication node is instructed not to send the first signal, and if the value of this bit is 0, it indicates that the second wireless communication node is instructed to send the first signal.

It is noted that in other embodiments of the invention, the first indication information may also be a signal or a channel.

That is, the first wireless communication node sends the first indication information to instruct the second wireless communication node in the deactivated state, the closed state, or the incommunicable state to send the first signal. Therefore, the second wireless communication node sends the first signal after receiving the first indication information instead of sending the first signal periodically, which reduces the energy consumption of the wireless network.

As an implementation of step S101, as shown in FIG. 2, FIG. 2 illustrates a step S201. At step S201, the first indication information is sent to the second wireless communication node in the first state according to first reference information.

The first reference information includes at least one of the following: location information of a terminal device connected to the first wireless communication node, a first result of signal measurement of the terminal device, grade indication information corresponding to the first result, or switching probability indication information of the terminal device.

The terminal device involved in the embodiment of the invention may be a device that provides voice and/or data connectivity to a user, a handheld device with a wireless connectivity function, or other processing devices connected to a wireless modem. The name of the terminal device may also be different in different systems. For example, in a 5G system, the terminal device may be referred to as a user equipment (UE). The wireless terminal device may communicate with one or more core networks (CNs) via a radio access network (RAN). The wireless terminal device may be a mobile terminal device such as a cell phone (or "cellular" phone) and a computer having a mobile terminal device, a portable mobile device, a pocket-sized mobile device, a handheld mobile device, a computer-built mobile device or a vehicle-mounted mobile device that exchanges language and/or data with the RAN. Examples of the wireless terminal device include a personal communication service (PCS) phone, a cordless phone, a session initiated protocol (SIP) phone, a wireless local loop (WLL) station, a personal digital assistant (PDA), and the like. The wireless terminal device may also be referred to as a system, a subscriber unit, a subscriber station, a mobile station, a mobile, a remote station, an access point, a remote terminal, an access terminal, a user terminal, a user agent, or a user device, which is not limited in the embodiments of the invention.

In the embodiment, the first wireless communication node may first obtain at least one of location information of a terminal device connected to the first wireless communication node, a first result of signal measurement of the terminal device, grade indication information corresponding to the first result, or switching probability indication information of the terminal device as the first reference information, and then generate and send the first indication information according to the acquired first reference information to instruct the second wireless communication node in the deactivated state, the closed state, or the incommunicable state to send the first signal, so that the second wireless communication node sends the first signal after receiving the first indication information instead of sending the first signal periodically, which reduces the energy consumption of the wireless network.

The method for sending a signal of the embodiment of the invention is described below in combination with different embodiments according to content of the first reference information.

### Embodiment 1

In Embodiment 1, the first reference information includes a first result of signal measurement of the terminal device. The first result is used to indicate at least one of a signal to interference plus noise ratio (SINR), a reference signal receiving power (RSRP), a reference signal receiving quality (RSRQ) or a received signal strength indication (RSSI).

FIG. 3 is a flowchart of a method for sending a signal according to embodiment 1 of the invention.

As illustrated in FIG. 3, the method for sending a signal includes the following steps S301-S302.

At step S301, the first result is received, in which the first result is obtained by measuring, by the terminal device, a second signal sent by the first wireless communication node.

The second signal may be a downlink signal. For example, the second signal may be at least one of a synchronization signal block (SSB), a channel state information reference signal (CSI-RS), a positioning reference signal (PRS), or a newly designed downlink signal, etc.

In detail, the downlink signal is sent by the first wireless communication node to the terminal device. The terminal device measures the downlink signal sent by the first wireless communication node and obtains a measurement result, i.e., the first result, which may be at least one of an SINR, an RSRP, an RSRQ or an RSSI, and then sends the first result to the first wireless communication node. The first wireless communication node then receives the first result.

It is noted that the specific type and form of the downlink signal are not limited in the embodiment 1.

At step S302, the first indication information is sent to the second wireless communication node in the first state according to the first result.

In detail, the first wireless communication node generates the first indication information based on the first result and then sends the first indication information to the second wireless communication node to instruct the second wireless communication node in a deactivated state, a closed state, or an incommunicable state to send the first signal.

It is noted that the first indication information sent by the first wireless communication node to the second wireless communication node is interaction information between different network devices. For example, if the second wireless communication node and the first wireless communication node are a second cell and a first cell, respectively, they may be located on the same carrier or different carriers, and may be different cells under the same network device or different cells under different network devices. For example, if the second wireless communication node and the first wireless communication node are cells under the same network device, the first wireless communication node sending the first indication information to the second wireless communication node may be implemented within the network device.

The network device involved in the embodiment of the invention may be a base station, and the base station may include multiple cells providing services for the terminal. Depending on a specific application scenario, the base station may be called an access point, or a device in an access network that communicates with wireless terminal devices through one or more sectors on an air interface, or may be referred to as other names. The network device can be used to convert received air frames into Internet Protocol (IP) packets and vice versa, acting as a router between the wireless terminal device and the rest of the access network. The rest of the access network may include an IP communication network. The network device also coordinates the management of attributes of the air interface. For example, the network device involved in the embodiments of the invention may be a Base Transceiver Station (BTS) in a Global System for Mobile communications (GSM) or a Code Division Multiple Access (CDMA), a network device (NodeB) in a Wide-band Code Division Multiple Access (WCDMA), an evolutional Node B (eNB or e-NodeB) in a long term evolution (LTE) system, a 5G base station (gNB) in a 5G network architecture or a next generation system, a Home evolved Node B (HeNB), a relay node, a femto, a pico or the like, which is not limited in the embodiments of the invention. In some network structures, the network device may include a centralized unit (CU) node and a distributed unit (DU) node, and the CU and the DU may also be geographically separated.

The network device and the terminal device can each use one or more antennas for multi-input-multi-output (MIMO) transmission. The MIMO transmission can refer to single user MIMO (SU-MIMO) or multiple user MIMO (MU-MIMO). Depending on the form and number of antenna combinations, the MIMO transmission can be 2D-MIMO, 3D-MIMO, FD-MIMO or massive-MIMO, or it can be diversity transmission, pre-coding transmission or beam-forming transmission, etc.

According to the method for sending a signal of the embodiment of the invention, the second wireless communication node sends the first signal after receiving the first indication information instead of sending the first signal periodically, which reduces the energy consumption of the wireless network.

In order to further reduce the energy consumption of the terminal device connected to the first wireless communication node, based on the above embodiments, before step S301, the method further includes: sending a first threshold to the terminal device.

If the terminal device determines that the first result is greater than or equal to the first threshold, the terminal device sends the first result to the first wireless communication node, or if the terminal device determines that the first result is less than or equal to the first threshold, the terminal device sends the first result to the first wireless communication node.

That is, the terminal device may send a measurement result (e.g., SINR, RSRP, RSRQ and RSSI) of the downlink signal to the first wireless communication node when the measurement result of the downlink signal satisfies a certain condition. The first wireless communication node determines the first indication information according to the measurement result of the downlink signal as follows.

The first wireless communication node configures the first threshold and sends the first threshold to the terminal device.

The terminal device may selectively perform one of the following steps:
if the measurement result of the downlink signal is less than or equal to the first threshold, sending the measurement result of the downlink signal, i.e., the first result, to the first wireless communication node; or
if the measurement result of the downlink signal is greater than or equal to the first threshold, sending the measurement result of the downlink signal, i.e., the first result, to the first wireless communication node.

FIG. 4 is a flowchart of another method for sending a signal according to embodiment 1 of the invention.

As illustrated in FIG. 4, the method for sending a signal includes the following steps S401-S402.

At step S401, a first result is obtained by measuring an uplink signal sent by a terminal device.

The uplink signal includes at least one of a sounding reference signal (SRS) or a newly designed uplink signal.

In detail, the uplink signal is sent by the terminal device to the first wireless communication node. After receiving the uplink signal sent by the terminal device, the first wireless communication node measures the uplink signal and obtains the measurement result, i.e., the first result, which may be at least one of an SINR, an RSRP, an RSRQ or an RSSI.

It is noted that the specific type and form of the uplink signal are not limited in embodiment 1.

At step S402, first indication information is sent to a second wireless communication node in a first state according to the first result.

In detail, the first wireless communication node generates the first indication information according to the first result and sends the first indication information to the second wireless communication node to instruct the second wireless communication node in a deactivated state, a closed state, or an incommunicable state to send a first signal.

It is noted that the first indication information sent by the first wireless communication node to the second wireless communication node is interaction information between different network devices. For example, if the second wireless communication node and the first wireless communication node are a second cell and a first cell, respectively, they may be located on the same carrier or different carriers, and may be different cells under the same network device or different cells under different network devices. For example, if the second wireless communication node and the first wireless communication node are cells under the same network device, the first wireless communication node sending the first indication information to the second wireless communication node may be implemented within the network device.

According to the method for sending a signal of the embodiment of the invention, the second wireless communication node sends the first signal after receiving the first indication information instead of sending the first signal periodically, which reduces the energy consumption of the wireless network.

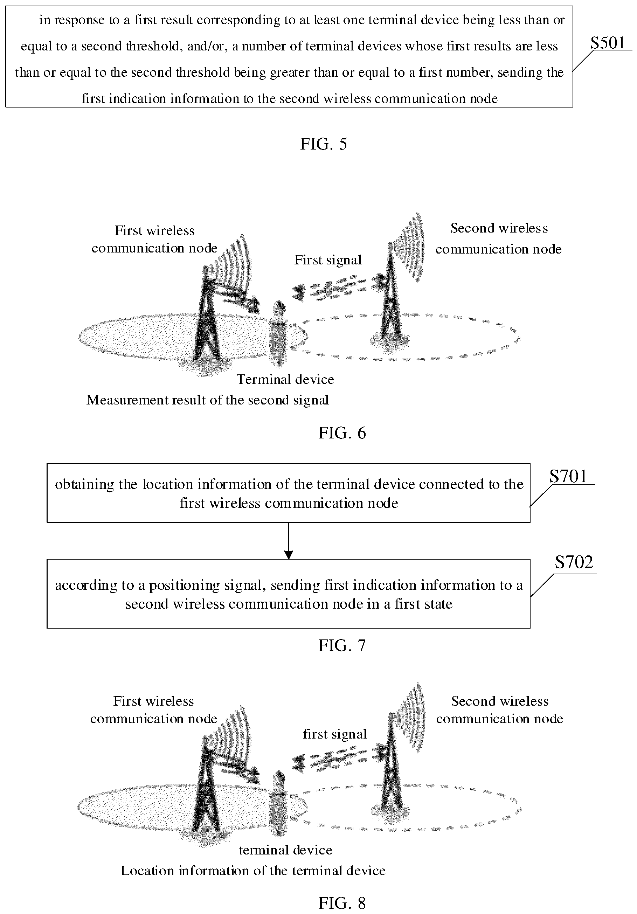

In order to further reduce the energy consumption of the second wireless communication node, after obtaining the first result and before executing the above step S302 or S402, as shown in FIG. 5, the method further includes a step S501. At step S501, in response to a first result corresponding to at least one terminal device being less than or equal to a second threshold, and/or, a number of terminal devices whose first results are less than or equal to the second threshold being greater than or equal to a first number, the first indication information is sent to the second wireless communication node.

In this step, after obtaining the first result sent by at least one terminal device, the first wireless communication node determines a signal quality of each terminal device based on the first result of the terminal device, and compares the signal quality of each terminal device with a second threshold (e.g., a second quality threshold). If the signal qualities of all the terminal devices are greater than the second threshold, or the number of terminal devices whose signal qualities are greater than or equal to the second threshold is greater than or equal to the first number, it indicates that most of the terminal devices operate well under the first wireless communication node and a probability of switching to the second wireless communication node is low. In this case, there is no need to generate the first indication information. If the signal qualities of all the terminal devices are less than or equal to the second threshold, or the number of terminal devices whose signal qualities are less than or equal to the second threshold is greater than or equal to the first number, it indicates that some of the terminal devices are not operating well under the first wireless communication node and the probability of switching to the second wireless communication node is high. In this case, the first indication information is generated and sent to the second wireless communication node to instruct the second wireless communication node in the deactivated state, the closed state, or the incommunicable state to send the first signal.

By way of example, how to reduce the power consumption of the second wireless communication node in the first state is described specifically below in combination with FIG. 6.

As shown in FIG. 6, FIG. 6 includes two wireless communication nodes and one terminal device. The two wireless communication nodes are a first wireless communication node and a second wireless communication node, and the first wireless communication node may be a wireless communication node in a state (e.g., at least one of an activated state, an open state and a communicative state) that is opposite to a first state, and the second wireless communication node is a wireless communication node that is in the first state (e.g., one of a deactivated state, a closed state, or an incommunicable state). The specific process is described as follows.

The first wireless communication node sends a second signal to the terminal device, in which the second signal is a downlink signal, and the terminal device is a terminal device in a connected state under the first wireless communication node.

The terminal device sends a measurement result of the downlink signal to the first wireless communication node.

The first wireless communication node determines the first indication information based on historical downlink signal measurement results of one or more terminal devices, and sends the first indication information to the second wireless communication node.

If the measurement result of the downlink signal is relatively good, it indicates that the terminal device operates well under the first wireless communication node and the probability of switching to the second wireless communication node is low.

If the measurement result of the downlink signal is relatively poor, it indicates that the terminal device operates poorly under the first wireless communication node and the probability of switching to the second wireless communication node is high.

According to the method for sending a signal in embodiment 1, after obtaining the first result, the first wireless communication node determines the signal quality of each terminal device based on the first result of the terminal device. If the signal quality is less than or equal to the second threshold, and/or, the number of terminal devices whose signal qualities are less than or equal to the second threshold is greater than or equal to the first number, the first wireless communication node generates the first indication information and sends the first indication information to the second wireless communication node, to cause the second wireless communication node to send the first signal instead of periodically sending the first signal, which reduces the energy consumption of the second wireless communication node.

### Embodiment 2

In embodiment 2, the first reference information includes location information of a terminal device connected to a first wireless communication node.

The first wireless communication node may be at least one of a first network device, a first cell, or a first carrier. In the invention, the specific name or existence form of the first wireless communication node can be selected according to the actual needs.

FIG. 7 is a flowchart of a method for sending a signal according to embodiment 2 of the invention.

As illustrated in FIG. 7, the method for sending a signal in embodiment 2 includes steps S701-S702.

At step S701, the location information of the terminal device connected to the first wireless communication node is obtained.

In some embodiments, the location information includes at least one of the following: coordinate information of the terminal device; relative coordinate information of the terminal device with respect to a first reference point; distance information of the terminal device with respect to the first reference point; or direction information of the terminal device with respect to the first reference point. The first reference point is at least one of a reference terminal device, a reference wireless communication node or the first wireless communication node.

That is, the location information may be a location coordinate of the terminal device, which may be an absolute location coordinate of the terminal device, or the location information is relative location information of the terminal device, for example, a relative location or distance of the terminal device with respect to the first reference point. The first reference point may be a reference terminal device, a reference wireless communication node, a first wireless communication node, or a network device corresponding to the first wireless communication node.

In this step, obtaining the location information includes: determining the location information of the terminal device by positioning the terminal device; and/or receiving the location information sent by the terminal device; and/or receiving the location information sent by a network element for positioning the terminal device.

If the location information of the terminal device is obtained by receiving the location information sent by the terminal device, the first wireless communication node sends location information of the first reference point to the terminal device, in which the location information of the first reference point is used to indicate a location where the first reference point is located, such as a location coordinate of a network device corresponding to a cell where the terminal device is located, and/or, a second location range covered by the first reference point, such as a geometry of the cell where the terminal device is located.

The terminal device obtains the geometry of the cell where the terminal device is located and/or the location coordinate of the network device corresponding to the cell where the terminal device is located and determines the location information of the terminal device based on such information, and then sends the location information of the terminal device to the first wireless communication node. The measurement information and the specific algorithm used by the terminal device in determining the location information of the terminal device are not limited in this embodiment.

If the location information of the terminal device is obtained by receiving the location information sent by the network element for positioning the terminal device, the first wireless communication node sends the location information of the first reference point to the terminal device, in which the location information of the first reference point is used to indicate a location where the first reference point is located (e.g., a location where a network device corresponding to a cell in which the terminal device is located), and/or, a second location range covered by the first reference point (a geometry of the cell in which the terminal device is located).

The network element, e.g., a positioning device, obtains the geometry of the cell in which the terminal device is located and/or the location, such as a location coordinate of the network device corresponding to the cell in which the terminal device is located, and determines the location information of the terminal device based on such information and sends the obtained location information of the terminal device to the first wireless communication node. The specific measurement signal and algorithm used by the network element to determine the location information of the terminal device are not limited in this embodiment.

In some embodiments, the terminal device may also send the location information of the terminal device to the first wireless communication node when the location information of the terminal device satisfies a certain condition, and the process in which the first wireless communication node determines the first indication information according to whether or not it receives the location information of the terminal device includes: sending by the first wireless communication node a first location range to the terminal device; in which the first location range is a first coordinate range, in which the location information is sent to the first wireless communication node in response to determining that a coordinate of the terminal device is within or outside the first coordinate range; or the first location range is a first relative coordinate range, in which the location information is sent to the first wireless communication node in response to determining that a relative coordinate of the terminal device with respect to the first reference point is within or outside the first relative coordinate range; or the first location range is a first distance, in which the location information is sent to the first wireless communication node in response to determining that a distance of the terminal device with respect to the first reference point is less than or equal to the first distance; or the first location range is a first distance, in which the location information is sent to the first wireless communication node in response to determining that the distance of the terminal device with respect to the first reference point is greater than or equal to the first distance.

At step S702, according to a positioning signal, the first indication information is sent to the second wireless communication node in the first state.

The second wireless communication node may be at least one of a second network device, a second cell or a second carrier. In the invention, the specific name or existence form of the second wireless communication node may be selected according to the actual need.

In the step, after obtaining the location information of the terminal device, in response to determining, according to the location information of the terminal device, that a distance between at least one terminal device and the first wireless communication node is greater than or equal to a distance threshold, and/or that a number of terminal devices whose distances to the first wireless communication node are greater than or equal to the distance threshold is greater than or equal to a second number, the first wireless communication node sends the first indication information to the second wireless communication node; and/or, in response to determining, according to the location information of the terminal device, that at least one terminal device is not within a second location range, and/or that a number of terminal devices that are not within the second location range is greater than a third number, the first wireless communication node sends the first indication information to the second wireless communication node.

The first indication information sent by the first wireless communication node to the second wireless communication node is interaction information between different network devices. If the second wireless communication node and the first wireless communication node are a second cell and a first cell, respectively, they may be located on the same carrier or different carriers, and may be different cells under the same network device or different cells under different network devices. If the second wireless communication node and the first wireless communication node are cells under the same network device, the first wireless communication node sending the first indication information to the second wireless communication node may be implemented within the network device.

How to further reduce the power consumption of the second wireless communication node in the first state is described in detail below in combination with FIG. 8.

As shown in FIG. 8, FIG. 8 includes two wireless communication nodes and one terminal device. The two wireless communication nodes are a first wireless communication node and a second wireless communication node, and the first wireless communication node may be a wireless communication node in a state (e.g., at least one of an activated state, an open state and a communicative state) that is opposite to a first state, and the second wireless communication node is a wireless communication node that is in the first state (e.g., one of a deactivated state, a closed state, or an incommunicable state). The specific process is described as follows.

The terminal device determines location information of the terminal device and sends the location information of the terminal device to the first wireless communication node.

The first wireless communication node determines first indication information based on historical terminal device location information of one or more terminal devices, and sends the first indication information to the second wireless communication node.

When the terminal device is close to a network device corresponding to the first wireless communication node, it indicates that the terminal device operates well under the first wireless communication node and a probability of switching to the second wireless communication node is low.

When the terminal device is far from the network device corresponding to the first wireless communication node, it indicates that the terminal device is not operating well under the first wireless communication node and the probability of switching to the second wireless communication node is high. In this case, the first wireless communication node generates the first indication information and sends the first indication information to the second wireless communication node to instruct the second wireless communication node that is in the deactivated state, the closed state, or the incommunicable state to send a first signal.

According to the method for sending a signal in embodiment 2, after obtaining the location information of the terminal device, the first wireless communication node may first determine whether the terminal device is far from or close to the first wireless communication node based on the location information, and generate the first indication information and send the first indication information to the second wireless communication node when the terminal device is far from the first wireless communication node, to cause the second wireless communication node to send the first signal instead of periodically sending the first signal, which further reduces the energy consumption of the second wireless communication node.

### Embodiment 3

In embodiment 3, the first reference information includes the grade indication information corresponding to the first result.

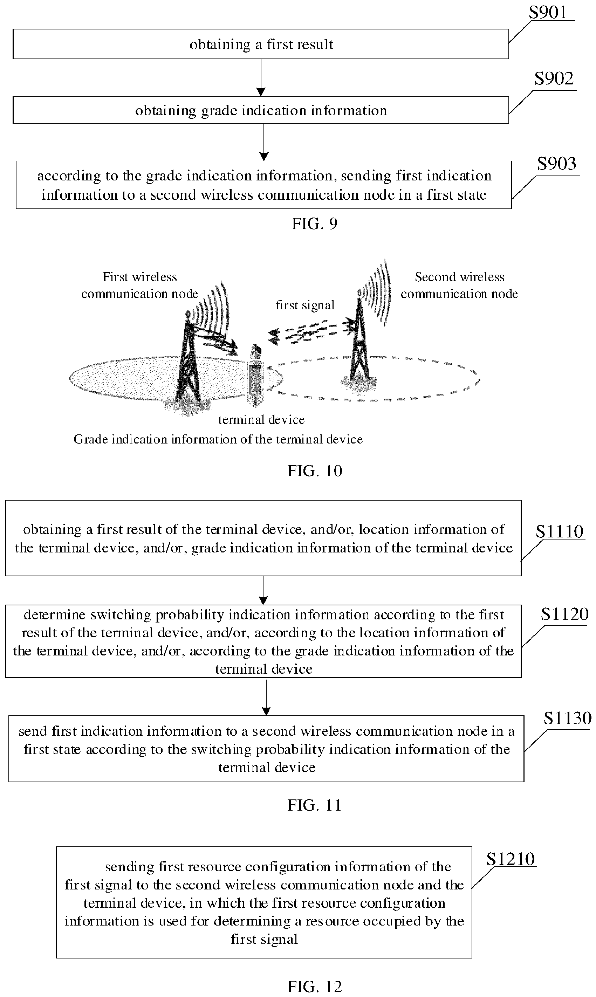

FIG. 9 is a flowchart of a method for sending a signal according to embodiment 3 of the invention.

As illustrated in FIG. 9, the method for sending a signal includes steps S901-S903.

At step S901, a first result is obtained.

It is noted that the first result may be received via the above step S301 in which the first result is received or the step S401 in which an uplink signal sent by the terminal device is measured to obtain the first result. Details can be referred to the contents described in the above steps S301 and S401, which will not be repeated here.

At step S902, the grade indication information is obtained.

As an implementation of step S902, the first wireless communication node determines the grade indication information according to a result range corresponding to the first result of the terminal device, and/or, according to a distance range corresponding to a distance between the terminal device and the first wireless communication node.

As another implementation of step S902, the first wireless communication node receives the grade indication information sent by the terminal device. The grade indication information is determined according to the result range corresponding to the first result of the terminal device, and/or, according to the distance range corresponding to the distance between the terminal device and the first wireless communication node.

In some embodiments, the method further includes: sending a first grade threshold to the terminal device.

That is, the first wireless communication node is configured to determine the first grade threshold of the grade indication information of the terminal device and send the first grade threshold to the terminal device. After receiving the first grade threshold, the terminal device may selectively perform one of the following steps: the terminal device sending the grade indication information to the first wireless communication node if the grade indication information is less than or equal to the first grade threshold, or the terminal device sending the grade indication information to the first wireless communication node if the grade indication information is greater than or equal to the first grade threshold.

Certainly, the first wireless communication node may configure N thresholds for determining the grade indication information of the terminal device for the terminal device, and the terminal device determines the grade indication information of the terminal device based on the N thresholds. If a measurement result of a second signal is less than or equal to a threshold 1, the grade indication information of the terminal device is grade indication information 1, and the terminal device sends the grade indication information 1 to the first wireless communication node. If the measurement result of the second signal is greater than the threshold 1 and less than or equal to a threshold 2, the grade indication information of the terminal device is grade indication information 2, and the terminal device sends the grade indication information 2 to the first wireless communication node, and so on.

At step S903, according to the grade indication information, first indication information is sent to a second wireless communication node in a first state.

In this step, after obtaining the grade indication information, the first wireless communication node determines whether to send the first indication information to the second wireless communication node in the first state based on the grade indication information. In response to a grade corresponding to the first result of at least one terminal device being less than or equal to a second grade threshold, and/or, a number of terminal devices whose grades are less than or equal to the second grade threshold being greater than a fourth number, the first wireless communication node sends the first indication information to the second wireless communication node in the first state.

The first indication information sent by the first wireless communication node to the second wireless communication node is interaction information between different network devices. If the second wireless communication node and the first wireless communication node are a second cell and a first cell, respectively, they may be located on the same carrier or different carriers, and may be different cells under the same network device or different cells under different network devices. If the second wireless communication node and the first wireless communication node are cells under the same network device, the first wireless communication node sending the first indication information to the second wireless communication node may be implemented within the network device.

How to further reduce the power consumption of the second wireless communication node in the first state is described in detail below in combination with FIG. 10.

As shown in FIG. 10, FIG. 10 includes two wireless communication nodes and one terminal device. The two wireless communication nodes are a first wireless communication node and a second wireless communication node, and the first wireless communication node may be a wireless communication node in a state (e.g., at least one of an activated state, an open state and a communicative state) that is opposite to a first state, and the second wireless communication node is a wireless communication node that is in the first state (e.g., one of a deactivated state, a closed state, or an incommunicable state). The specific process is described as follows. The first wireless communication node sends a second signal to the terminal device, in which the second signal is a downlink signal, and the terminal device is a terminal device in a connected state under the first wireless communication node. The terminal device determines grade indication information of the terminal device according to a measurement result of the second signal. The terminal device sends the grade indication information in which it is located to the first wireless communication node. The first wireless communication node determines first indication information based on the grade indication information in which one or more terminal devices are located and sends the first indication information to the second wireless communication node.

If the grade indication information of the terminal device is 1, it indicates that the terminal device operates well under the first wireless communication node, and a probability of switching to the second wireless communication node is low. If the grade indication information of the terminal device is N, it indicates that the terminal device operates poorly under the first wireless communication node, and the probability of switching to the second wireless communication node is high. In this case, the first wireless communication node generates the first indication information and sends the first indication information to the second wireless communication node to instruct the second wireless communication node in a deactivated state, a closed state, or an incommunicable state to send a first signal.

According to the method for sending a signal of embodiment 3, after obtaining the first result, the first wireless communication node obtains the grade indication information and determines whether to send the first indication information to the second wireless communication node in the first state based on the grade indication information, so as to cause the second wireless communication node to send the first signal instead of periodically sending the first signal, which can further reduce the energy consumption of the second wireless communication node.

### Embodiment 4

The first reference information includes switching probability indication information of the terminal device.

FIG. 11 is a flowchart of a method for sending a signal according to embodiment 4 of the invention.

As illustrated in FIG. 11, the method for sending a signal includes steps S1110-S1130.

At step S1110, a first result of the terminal device, and/or, location information of the terminal device, and/or, grade indication information of the terminal device is obtained.

At step S1120, the switching probability indication information is determined according to the first result of the terminal device, and/or, according to the location information of the terminal device, and/or, according to the grade indication information of the terminal device.

As an implementation of step S1120, the switching probability indication information sent by the terminal device is received, in which the switching probability indication information is determined according to the first result of the terminal device, and/or, according to the location information of the terminal device, and/or, according to the grade indication information of the terminal device.

In some embodiments, the method further includes: sending a first probability threshold to the terminal device, in which the first probability threshold is used for the terminal device to send the switching probability indication information to a first wireless communication node in response to determining that a switching probability is greater than or equal to the first probability threshold, or the first probability threshold is used for the terminal device to send the switching probability indication information to the first wireless communication node in response to determining that the switching probability is less than or equal to the first probability threshold.

That is, the first wireless communication node may configure the first probability threshold for the terminal device. If the switching probability indication information is less than or equal to the first probability threshold, the terminal device sends the switching probability indication information to the first wireless communication node. Or, if the switching probability indication information is greater than or equal to the first probability threshold, the terminal device sends the switching probability indication information to the first wireless communication node. If the switching probability indication information is less than or equal to the first probability threshold, the terminal device sends a grade corresponding to the switching probability indication information to the first wireless communication node. Or, if the switching probability indication information is greater than or equal to the first probability threshold, the terminal device sends the grade corresponding to the switching probability indication information to the first wireless communication node.

At step S1130, first indication information is sent to a second wireless communication node in a first state according to the switching probability indication information of the terminal device.

In this step, after obtaining the switching probability indication information of the terminal device, the first wireless communication node determines whether to send the first indication information to the second wireless communication node in the first state based on the switching probability indication information of the terminal device. In response to a switching probability of at least one terminal device being greater than or equal to a second probability threshold, or, a number of terminal devices whose switching probabilities are greater than or equal to the second probability threshold being greater than or equal a fifth number, the first indication information is sent to the second wireless communication node in the first state.

The first indication information sent by the first wireless communication node to the second wireless communication node is interaction information between different network devices. If the second wireless communication node and the first wireless communication node are a second cell and a first cell, respectively, they may be located on the same carrier or different carriers, and may be different cells under the same network device or different cells under different network devices. If the second wireless communication node and the first wireless communication node are cells under the same network device, the first wireless communication node sending the first indication information to the second wireless communication node may be implemented within the network device.

According to the method for sending a signal in embodiment 4, after obtaining the first result of the terminal device, and/or, the location information of the terminal device, and/or, the grade indication information of the terminal device, the first wireless communication node determines the switching probability indication information based on the first result of the terminal device, and/or, the location information of the terminal device, and/or, the grade indication information of the terminal device. The first wireless communication node determines whether to send the first indication information to the second wireless communication node in the first state based on the switching probability indication information of the terminal device. If the switching probability indication information of the terminal device satisfies a certain condition, the first wireless communication node sends the first indication information to the second wireless communication node in the first state, to instruct the second wireless communication node to send the first signal instead of periodically sending the first signal, which can further reduce the energy consumption of the second wireless communication node.

It is noted that the above embodiments 1 to 4 are examples in which the first reference information includes one of the location information of the terminal device connected to the first wireless communication node, the first result of signal measurement of the terminal device, the grade indication information corresponding to the first result, or the switching probability indication information of the terminal device. In other embodiments of the invention, the first reference information may include at least two of the location information of the terminal device connected to the first wireless communication node, the first result of signal measurement of the terminal device, the grade indication information corresponding to the first result, or the switching probability indication information of the terminal device. In such case, the specific process can be found in the contents of the above embodiments 1 to 4, the details will not be repeated here.

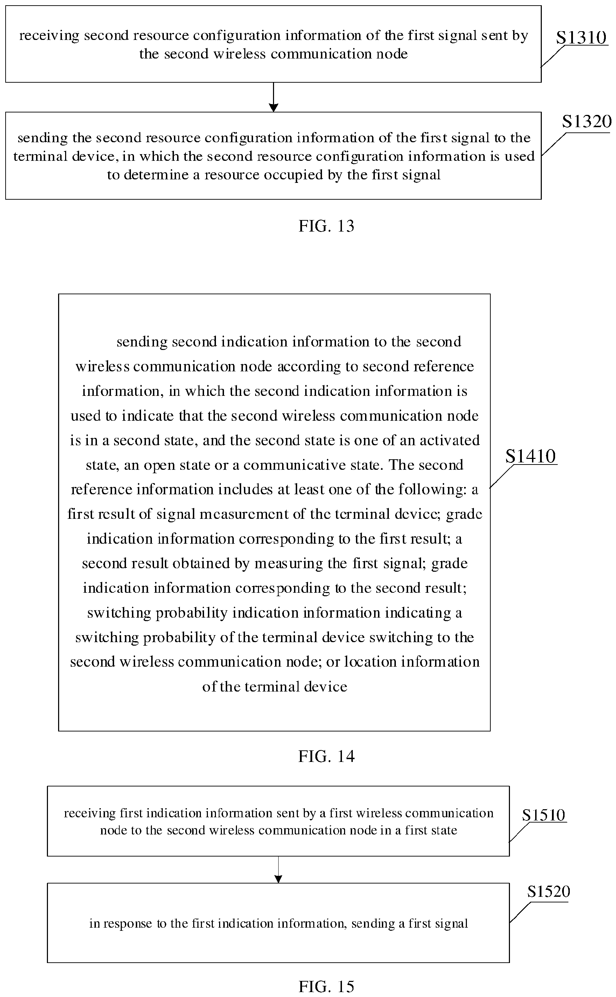

After performing the steps of the above embodiments 1 to 4, the step in FIG. 12 below, the steps in FIG. 13, or the step in FIG. 14 below may be performed.

FIG. 12 is a flowchart of a method for sending a signal according to an embodiment of the invention.

As illustrated in FIG. 12, the method for sending a signal includes step S1210. At step S1210, first resource configuration information of the first signal is sent to the second wireless communication node and the terminal device, in which the first resource configuration information is used for determining a resource occupied by the first signal.

In this step, when generating the first indication information, the first wireless communication node determines the resource occupied by the first signal, i.e., the first resource configuration information, and sends the first resource configuration information to the second wireless communication node and the terminal device, to cause the second wireless communication node to send the first signal on a first resource.

That is, the first indication information may also include the first resource configuration information corresponding to the first signal. After receiving the first indication information, the second wireless communication node sends the first signal on the first resource.

FIG. 13 is a flowchart of a method for sending a signal according to an embodiment of the invention.

As illustrated in FIG. 13, the method for sending a signal includes steps S1310 and S1320.

At step S1310, second resource configuration information of the first signal sent by the second wireless communication node is received.

At step S1320, the second resource configuration information of the first signal is sent to the terminal device, in which the second resource configuration information is used to determine a resource occupied by the first signal.

After receiving the first indication information, the second wireless communication node determines the second resource configuration information of the first signal and sends the second resource configuration information to the first wireless communication node. After receiving the second resource configuration information, the first wireless communication node sends the second resource configuration information of the first signal to the terminal device, to cause the second wireless communication node to send the first signal on the first resource.

That is, if the first indication information instructs the second wireless communication node to send the first signal, the second wireless communication node determines the second resource configuration information of the first signal. After receiving the second resource configuration information sent by the second wireless communication node, the first wireless communication node sends the second resource configuration information of the first signal to the terminal device, to cause the second wireless communication node to send the first signal on the first resource.

FIG. 14 is a flowchart of a method for sending a signal according to an embodiment of the invention.

As illustrated in FIG. 14, the method for sending a signal includes step S1410. At step S1410, second indication information is sent to the second wireless communication node according to second reference information, in which the second indication information is used to indicate that the second wireless communication node is in a second state, and the second state is one of an activated state, an open state or a communicative state. The second reference information includes at least one of the following: a first result of signal measurement of the terminal device; grade indication information corresponding to the first result; a second result obtained by measuring the first signal; grade indication information corresponding to the second result; switching probability indication information indicating a switching probability of the terminal device switching to the second wireless communication node; or location information of the terminal device.

As an implementation of step S1410, the first wireless communication node determines the second indication information based on the first result, and/or, the location information, and/or, the grade indication information corresponding to the first result, and the second result, and/or, the grade indication information corresponding to the second result. The first wireless communication node sends the second indication information to the second wireless communication node.

The specific processes are described in detail below. The terminal device sends the first result obtained by measuring the second signal (or uplink signal), and/or, the location information of the terminal device, and/or, the grade indication information corresponding to the first result and the second result obtained by measuring the first signal, and/or, the grade indication information corresponding to the second result, to the first wireless communication node. The first signal may be a signal periodically sent by the second wireless communication node in the first state.

The first wireless communication node determines the second indication information based on information sent by one or more terminal devices.

The first wireless communication node sends the second indication information to the second wireless communication node. The second wireless communication node determines whether it is in an activated state, an open state or a communicative state based on the second indication information.

As an implementation of step S1410, the first wireless communication node determines the second indication information based on the switching probability indication information indicating the switching probability of the terminal device switching to the second wireless communication node. The switching probability indication information may be determined by the terminal device.

The switching probability indication information indicating the switching probability of the terminal device switching to the second wireless communication node may be determined by the terminal device according to the first result obtained by measuring the second signal (or uplink signal), and/or, the location information of the terminal device, and/or, the grade indication information corresponding to the first result and the second result obtained by measuring the first signal. The first result obtained by measuring the second signal (or uplink signal), the location information of the terminal device, and the grade indication information corresponding to the first result can be referred to embodiments 1-3, which will not be repeated herein. In some embodiments, the terminal device may send the switching probability indication information indicating the switching probability of the terminal device switching to the second wireless communication node to the first wireless communication node.

The first wireless communication node may configure a third probability threshold for the terminal device. If the switching probability of the terminal device switching to the second wireless communication node is less than or equal to the third probability threshold, the terminal device generates the switching probability indication information indicating the switching probability of the terminal device switching to the second wireless communication node and sends it to the first wireless communication node. Or, if the switching probability of the terminal device switching to the second wireless communication node is greater than or equal to the third probability threshold, the terminal device generates the switching probability indication information indicating the switching probability of the terminal device switching to the second wireless communication node and sends it to the first wireless communication node. If the switching probability of the terminal device switching to the second wireless communication node is less than or equal to the third probability threshold, the terminal device determines a grade corresponding to the switching probability of the terminal device switching to the second wireless communication node as the second indication information and sends it to the first wireless communication node. If the switching probability of the terminal device switching to the second wireless communication node is greater than or equal to the third probability threshold, the terminal device determines the grade corresponding to the switching probability of the terminal device switching to the second wireless communication node as the second indication information and sends it to the first wireless communication node.

The first wireless communication node sends the second indication information to the second wireless communication node. The second wireless communication node can determine whether it is in an activated state, an open state or a communicative state based on the second indication information.

Therefore, the method for sending a signal of embodiments of the invention takes into account more comprehensive information relative to the related art to determine whether or not to activate the second wireless communication node.

The above method embodiments are performed by the first wireless communication node. The invention also provides a method for sending a signal that is performed by a second wireless communication node.

FIG. 15 is a flowchart of a method for sending a signal according to an embodiment of the invention.

As illustrated in FIG. 15, the method for sending a signal is performed by a second wireless communication node. FIG. 15 includes steps S1510 and S1520. At step S1510, first indication information sent by a first wireless communication node to the second wireless communication node in a first state is received. At step S1520, in response to the first indication information, a first signal is sent.

The first state is one of a deactivated state, a closed state, or an incommunicable state.

That is, the first wireless communication node sends the first indication information to the second wireless communication node in the first state to instruct the second wireless communication node in the first state to send the first signal. After receiving the first indication information, the second wireless communication node sends the first signal in response to the first indication information instead of periodically sending the first signal, which reduces the energy consumption of the second wireless communication node.

In an implementation of the embodiment of the invention, the first indication information is sent according to first reference information. The first reference information includes at least one of following: location information of a terminal device connected to the first wireless communication node; a first result of signal measurement of the terminal device; grade indication information corresponding to the first result; or switching probability indication information of the terminal device.

In an implementation of the embodiment of the invention, the method further includes: receiving first resource configuration information of the first signal sent by the first wireless communication node; and sending the first signal according to a resource indicated by the first resource configuration information.

In an implementation of the embodiment of the invention, the method further includes: sending second resource configuration information to the first wireless communication node according to a resource of the first signal, in which the second resource configuration information is for determining the resource occupied by the first signal.

In an implementation of the embodiment of the invention, the method further includes: receiving second indication information sent by the first wireless communication node, in which in response to the second indication information, the second wireless communication node is in a second state, and the second state is one of an activated state, an open state and a communicative state.

In an implementation of the embodiment of the invention, the second indication information is sent according to second reference information. The second reference information includes at least one of following: a first result of signal measurement of the terminal device; grade indication information corresponding to the first result; a second result obtained by measuring the first signal by the terminal device; grade indication information corresponding to the second result; switching probability indication information indicating a switching probability of the terminal device switching to the second wireless communication node; or location information of the terminal device.

It is noted that the explanatory description of the method for sending a signal in any of the above embodiments is also applicable to the method for sending a signal performed by the second wireless communication node. That is, the explanatory description and the technical details of the method for sending a signal in any of the above embodiments are also applicable to the method for sending a signal performed by the second wireless communication node, the implementation principles of the above methods are similar and will not be repeated herein.

According to the method for sending a signal of embodiments of the invention, after receiving the first indication information sent by the first wireless communication node to the second wireless communication node in the first state, the second wireless communication node sends the first signal in response to the first indication information instead of periodically sending the first signal, which reduces the energy consumption of the second wireless communication node.

The invention also provides a method for sending a signal that is performed by a terminal device connected to a first wireless communication node.

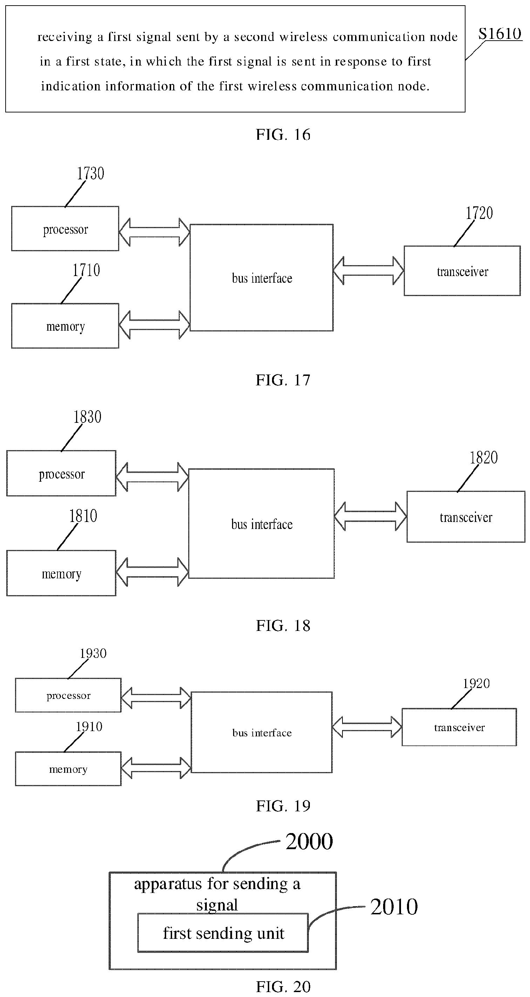

FIG. 16 is a flowchart of a method for sending a signal according to an embodiment of the invention.

As illustrated in FIG. 16, the method for sending a signal is performed by the terminal device connected to the first wireless communication node. The method includes step S1610. At step S1610, a first signal sent by a second wireless communication node in a first state is received.

The first signal is sent in response to first indication information of the first wireless communication node.

That is, the first wireless communication node sends the first indication information to the second wireless communication node in the first state to instruct the second wireless communication node in the first state to send the first signal. After receiving the first indication information, the second wireless communication node sends the first signal in response to the first indication information, and the terminal device receives the first signal sent by the second wireless communication node in the first state. In this way, the terminal device does not need to detect whether the first signal is received or not in real time, which reduces the energy consumption of the terminal device.

In an implementation of the embodiment of the invention, the first indication information is sent by the first wireless communication node according to first reference information. The first reference information includes at least one of the following: location information of the terminal device; a first result of signal measurement of the terminal device; grade indication information corresponding to the first result; or switching probability indication information of the terminal device.

The first result is used to indicate at least one of an SINR, an RSRP, an RSRQ or an RSSI.

In an implementation of the embodiment of the invention, in a case where the first reference information includes the first result, the method further includes: obtaining the first result by measuring a second signal sent by the first wireless communication node; and sending the first result to the first wireless communication node.

The second signal includes at least one of an SSB, a CSI-RS or a PRS.

In an implementation of the embodiment of the invention, sending the first result to the first wireless communication node, includes: in response to determining that the first result is greater than or equal to a first threshold, sending the first result to the first wireless communication node; or, in response to determining that the first result is less than or equal to the first threshold, sending the first result to the first wireless communication node.

In an implementation of the embodiment of the invention, the method further includes: receiving the first threshold sent by the first wireless communication node.

In an implementation of the embodiment of the invention, in a case where the first reference information includes the first result, the method further includes: sending an uplink signal to the first wireless communication node, in which the uplink signal is measured by the first wireless communication node to obtain the first result.

In an implementation of the embodiment of the invention, in a case where the first reference information includes the location information, the method further includes: sending the location information of the terminal device to the first wireless communication node.

The location information includes at least one of the following: coordinate information of the terminal device; relative coordinate information of the terminal device with respect to a first reference point; distance information of the terminal device with respect to the first reference point; or direction information of the terminal device with respect to the first reference point.

The first reference point is at least one of a reference terminal device, a reference wireless communication node or the first wireless communication node.

In an implementation of the embodiment of the invention, the method includes: receiving location information of the first reference point sent by the first wireless communication node, in which the location information of the first reference point is configured to indicate a location where the first reference point is located and/or a second location range covered by the first reference point.

In an implementation of the embodiment of the invention, sending the location information of the terminal device to the first wireless communication node, includes: sending the location information of the terminal device to the first wireless communication node according to a first location range, in which the first location range is a first coordinate range, in which the location information is sent to the first wireless communication node in response to determining that a coordinate of the terminal device is within or outside the first coordinate range; or the first location range is a first relative coordinate range, in which the location information is sent to the first wireless communication node in response to determining that a relative coordinate of the terminal device with respect to the first reference point is within or outside the first relative coordinate range; or the first location range is a first distance, in which the location information is sent to the first wireless communication node in response to determining that a distance of the terminal device with respect to the first reference point is less than or equal to the first distance; or the first location range is a first distance, in which the location information is sent to the first wireless communication node in response to determining that the distance of the terminal device with respect to the first reference point is greater than or equal to the first distance.

In an implementation of the embodiment of the invention, the method further includes: receiving a first location range sent by the first wireless communication node.

In an implementation of the embodiment of the invention, in a case where the first reference information includes the grade indication information, the method further includes: determining the grade indication information according to a result range corresponding to the first result of the terminal device, and/or, according to a distance range corresponding to a distance between the terminal device and the first wireless communication node; and sending the grade indication information to the first wireless communication node.

In an implementation of the embodiment of the invention, sending the grade indication information to the first wireless communication node, includes: in response to the grade indication information being less than or equal to a first grade threshold, sending the grade indication information to the first wireless communication node; or in response to the grade indication information being greater than or equal to the first grade threshold, sending the grade indication information to the first wireless communication node.

In an implementation of the embodiment of the invention, the method further includes: receiving the first grade threshold sent by the first wireless communication node.

In an implementation of the embodiment of the invention, in a case where the first reference information includes the switching probability indication information, the method further includes: determining the switching probability indication information according to the first result of the terminal device, and/or, according to the location information of the terminal device, and/or, according to the grade indication information of the terminal device; and sending the switching probability indication information to the first wireless communication node.

In an implementation of the embodiment of the invention, sending the switching probability indication information to the first wireless communication node, includes: in response to determining that the switching probability indication information is greater than or equal to a first probability threshold, sending the switching probability indication information to the first wireless communication node; or in response to determining that the switching probability indication information is less than or equal to the first probability threshold, sending the switching probability indication information to the first wireless communication node.

In an implementation of the embodiment of the invention, the method further includes: receiving the first probability threshold sent by the first wireless communication node.

In an implementation of the embodiment of the invention, the method further includes: receiving first resource configuration information configured by the first wireless communication node for the first signal. Receiving the first signal sent by the second wireless communication node in the first state includes: receiving the first signal sent by the second wireless communication node in the first state according to the first resource configuration information.

In an implementation of the embodiment of the invention, the method further includes: receiving second resource configuration information of the first signal sent by the first wireless communication node, in which the second resource configuration information is resource configuration information sent by the second wireless communication node to the first wireless communication node; and receiving the first signal sent by the second wireless communication node in the first state according to the second resource configuration information.

In an implementation of the embodiment of the invention, the method further includes: sending second reference information to the first wireless communication node, in which the second reference information is used for sending second indication information to the second wireless communication node, the second indication information is configured to indicate that the second wireless communication node is in a second state, and the second state is one of an activated state, an open state, and a communicative state. The second reference information includes at least one of following: a first result of signal measurement of the terminal device; grade indication information corresponding to the first result; a second result obtained by measuring the first signal by the terminal device; grade indication information corresponding to the second result; switching probability indication information indicating a switching probability of the terminal device switching to the second wireless communication node; or location information of the terminal device.

It is noted that the explanatory description of the method for sending a signal in any of the above embodiments is also applicable to the method for sending a signal performed by the terminal device connected to the first wireless communication node. That is, the explanatory description of the method for sending a signal and the technical details in any of the above embodiments are also applicable to the above-mentioned method for sending a signal performed by the terminal device connected to the first wireless communication node. The implementation principles of the two methods are similar and will not be repeated herein.

According to the method for sending a signal of embodiments of the invention, the first signal sent by the second wireless communication node in the first state is received. The first signal is sent in response to the first indication information of the first wireless communication node. In this way, the terminal device does not need to detect whether or not it receives the first signal in real time, which reduces the energy consumption of the terminal device.

The method provided by the embodiment of the invention may be applicable to various systems, in particular to 5G system. Examples of the applicable systems include a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, and a 5G new radio (NR) system. Each system includes terminal devices and network devices. The system may also include a core network portion, such as an Evolved Packet System (EPS), a 5G System (5GS), and so on.

In order to realize the above embodiments, the invention also provides a communication apparatus.

FIG. 17 is a block diagram of a communication apparatus according to an embodiment of invention.

As illustrated in FIG. 17, the communication apparatus includes: a memory 1710, a transceiver 1720, and a processor 1730.

The memory 1710 is configured to store computer programs, the transceiver 1720 is configured to transmit and receive data under the control of the processor 1730, and the processor 1730 is configured to read the computer programs stored in the memory 1710 and perform the following operation: sending first indication information to a second wireless communication node in a first state, in which the first state is one of a deactivated state, a closed state, and an incommunicable state, or the first indication information is configured to instruct the second wireless communication node to send a first signal.

In an implementation of the invention, sending the first indication information to the second wireless communication node in the first state, includes: sending the first indication information to the second wireless communication node in the first state according to first reference information. The first reference information includes at least one of following: location information of a terminal device connected to the first wireless communication node; a first result of signal measurement of the terminal device; grade indication information corresponding to the first result; or switching probability indication information of the terminal device.

In an implementation of the invention, in a case where the first reference information includes the first result, the processor 1730 is configured to: receive the first result, in which the first result is obtained by measuring a second signal sent by the first wireless communication node.

In an implementation of the invention, the processor 1730 is configured to: a first threshold to the terminal device, in which in response to determining that the first result is greater than or equal to the first threshold, the terminal device sends the first result to the first wireless communication node; or in response to determining that the first result is less than or equal to the first threshold, the terminal device sends the first result to the first wireless communication node.

In an implementation of the invention, in a case where the first reference information includes the first result, the processor 1730 is configured to: obtain the first result by measuring an uplink signal sent by the terminal device.

In an implementation of the invention, the second signal includes at least one of an SSB, a CSI-RS or a PRS.

In an implementation of the invention, the uplink signal includes an SRS.

In an implementation of the invention, the first result is used to indicate at least one of an SINR, an RSRP, an RSRQ or an RSSI.

In an implementation of the invention, in a case where the first reference information includes the first result, sending the first indication information to the second wireless communication node in the first state according to the first reference information includes: in response to a first result corresponding to at least one terminal device being less than or equal to a second threshold, and/or, a number of terminal devices whose first results are less than or equal to the second threshold being greater than or equal to a first number, sending the first indication information to the second wireless communication node.

In an implementation of the invention, in a case where the first reference information includes the location information, the processor 1730 is configured to: determine the location information of the terminal device by positioning the terminal device; and/or receive the location information sent by the terminal device; and/or receive the location information sent by a network element for positioning the terminal device.

In an implementation of the invention, the location information includes at least one of following: coordinate information of the terminal device; relative coordinate information of the terminal device with respect to a first reference point; distance information of the terminal device with respect to the first reference point; or direction information of the terminal device with respect to the first reference point.

In an implementation of the invention, the first reference point is at least one of a reference terminal device, a reference wireless communication node or the first wireless communication node.

In an implementation of the invention, the processor 1730 is configured to: send location information of the first reference point to the terminal device, in which the location information of the first reference point is configured to indicate a location where the first reference point is located, and/or, a second location range covered by the first reference point.

In an implementation of the invention, the processor 1730 is configured to: send a first location range to the terminal device, in which the first location range is a first coordinate range, in which the location information is sent to the first wireless communication node in response to determining that a coordinate of the terminal device is within or outside the first coordinate range; or the first location range is a first relative coordinate range, in which the location information is sent to the first wireless communication node in response to determining that a relative coordinate of the terminal device with respect to the first reference point is within or outside the first relative coordinate range; or the first location range is a first distance, in which the location information is sent to the first wireless communication node in response to determining that a distance of the terminal device with respect to the first reference point is less than or equal to the first distance; or the first location range is a first distance, in which the location information is sent to the first wireless communication node in response to determining that the distance of the terminal device with respect to the first reference point is greater than or equal to the first distance.

In an implementation of the invention, when sending the first indication information to the second wireless communication node in the first state according to the first reference information, the processor 1730 is configured to: in response to determining, according to the location information of the terminal device, that a distance between at least one terminal device and the first wireless communication node is greater than or equal to a distance threshold according to the location information of the terminal device, and/or that a number of terminal devices whose distances to the first wireless communication node are greater than or equal to the distance threshold is greater than or equal to a second number, send the first indication information to the second wireless communication node; and/or in response to determining, according to the location information of the terminal device, that at least one terminal device is not within a second location range, and/or that a number of terminal devices that are not within the second location range is greater than a third number, send the first indication information to the second wireless communication node.

In an implementation of the invention, in a case where the first reference information includes the grade indication information, the processor 1730 is configured to: determine the grade indication information according to a result range corresponding to the first result of the terminal device, and/or, according to a distance range corresponding to a distance between the terminal device and the first wireless communication node.

In an implementation of the invention, in a case where the first reference information includes the grade indication information of the terminal device, the processor 1730 is configured to: receive the grade indication information sent by the terminal device, in which the grade indication information is determined according to the result range corresponding to the first result of the terminal device, and/or, according to the distance range corresponding to the distance between the terminal device and the first wireless communication node.

In an implementation of the invention, the processor 1730 is configured to: send a first grade threshold to the terminal device, in which the first grade threshold is used for the terminal device to send the grade indication information to the first wireless communication node in a case where the grade indication information is less than or equal to the first grade threshold, or the first grade threshold is used for the terminal device to send the grade indication information to the first wireless communication node in a case where the grade indication information is greater than or equal to the first grade threshold.

In an implementation of the invention, in a case where the first reference information includes the grade indication information of the terminal device, when sending the first indication information to the second wireless communication node in the first state according to the first reference information, the processor 1730 is configured to: in response to a grade corresponding to the first result of at least one terminal device being less than or equal to a second grade threshold, and/or, a number of terminal devices whose grades are less than or equal to the second grade threshold being greater than a fourth number, send the first indication information to the second wireless communication node in the first state.

In an implementation of the invention, in a case where the first reference information includes the switching probability indication information, the processor 1730 is configured to: determine the switching probability indication information according to the first result of the terminal device, and/or, according to the location information of the terminal device, and/or, according to the grade indication information of the terminal device.

In an implementation of the invention, in a case where the first reference information includes the switching probability indication information, the processor 1730 is configured to: receive the switching probability indication information sent by the terminal device, in which the switching probability indication information is determined according to the first result of the terminal device, and/or, according to the location information of the terminal device, and/or, according to the grade indication information of the terminal device.

In an implementation of the invention, the processor 1730 is configured to: send a first probability threshold to the terminal device, in which the first probability threshold is used for the terminal device to send the switching probability indication information to the first wireless communication node in response to determining that a switching probability of the terminal device is greater than or equal to the first probability threshold, or the first probability threshold is used for the terminal device to send the switching probability indication information to the first wireless communication node in response to determining that the switching probability is less than or equal to the first probability threshold.

In an implementation of the invention, in a case where the first reference information includes the switching probability indication information of the terminal device, when sending the first indication information to the second wireless communication node in the first state according to the first reference information, the processor 1730 is configured to: in response to a switching probability of at least one terminal device being greater than or equal to a second probability threshold, or, a number of terminal devices whose switching probabilities are greater than or equal to the second probability threshold being greater than or equal a fifth number, send the first indication information to the second wireless communication node in the first state.

In an implementation of the invention, the processor 1730 is configured to: send first resource configuration information of the first signal to the second wireless communication node and the terminal device, in which the first resource configuration information is used for determining a resource occupied by the first signal.

In an implementation of the invention, the processor 1730 is configured to: receive second resource configuration information of the first signal sent by the second wireless communication node, and send the second resource configuration information of the first signal to the terminal device, in which the second resource configuration information is used to determine a resource occupied by the first signal.

In an implementation of the invention, the processor 1730 is configured to: send second indication information to the second wireless communication node according to second reference information, in which the second indication information is used to indicate that the second wireless communication node is in a second state, and the second state is one of an activated state, an open state or a communicative state. The second reference information includes at least one of the following: a first result of signal measurement of the terminal device; grade indication information corresponding to the first result; a second result obtained by measuring the first signal by the terminal device; grade indication information corresponding to the second result; switching probability indication information indicating a switching probability of the terminal device switching to the second wireless communication node; or location information of the terminal device.

It should be noted that the communication device provided by the embodiments of the invention is capable of realizing all the steps in the method embodiments of FIGS. 1-14 above and achieving the same technical effects, and the contents in the embodiment that are the same as in the method embodiments and the corresponding beneficial effects will not be specifically repeated herein.

In order to realize the above embodiments, the invention also provides a communication apparatus.

FIG. 18 is a block diagram of a communication apparatus according to an embodiment of invention.

As illustrated in FIG. 18, the communication apparatus includes: a memory 1810, a transceiver 1820, and a processor 1830.

The memory 1810 is configured to store computer programs, the transceiver 1820 is configured to transmit and receive data under the control of the processor 1830, and the processor 1830 is configured to read the computer programs stored in the memory 1810 and perform the following operation: receiving first indication information sent by a first wireless communication node to the second wireless communication node in a first state, and in response to the first indication information, sending a first signal, in which the first state is one of a deactivated state, a closed state, or an incommunicable state.

In an implementation of the embodiment of the invention, the first indication information is sent according to first reference information. The first reference information includes at least one of following: location information of a terminal device connected to the first wireless communication node; a first result of signal measurement of the terminal device; grade indication information corresponding to the first result; or switching probability indication information of the terminal device.

In an implementation of the embodiment of the invention, the processor 1830 is configured to: receive first resource configuration information of the first signal sent by the first wireless communication node, and send the first signal according to a resource indicated by the first resource configuration information

In an implementation of the embodiment of the invention, the processor 1830 is configured to: send second resource configuration information to the first wireless communication node according to a resource of the first signal, in which the second resource configuration information is used to determine the resource occupied by the first signal.

In an implementation of the embodiment of the invention, the processor 1830 is configured to: receive second indication information sent by the first wireless communication node, in which in response to the second indication information, the second wireless communication node is in a second state, and the second state is one of an activated state, an open state or a communicative state.

In an implementation of the embodiment of the invention, the second indication information is sent according to second reference information, and the second reference information includes at least one of the following: a first result of signal measurement of the terminal device; grade indication information corresponding to the first result; a second result obtained by measuring the first signal by the terminal device; grade indication information corresponding to the second result; switching probability indication information indicating a switching probability of the terminal device switching to the second wireless communication node; or location information of the terminal device.

It should be noted that the communication apparatus provided by the embodiments of the invention is capable of realizing all the steps in the method embodiment of FIG. 15 above and achieving the same technical effects, and the contents in the embodiment that are the same as in the method embodiments and the corresponding beneficial effects will not be specifically repeated herein.

In order to realize the above embodiments, the invention also provides a communication apparatus.

FIG. 19 is a block diagram of a communication apparatus according to an embodiment of invention.

As illustrated in FIG. 19, the communication apparatus includes: a memory 1910, a transceiver 1920, and a processor 1930.

The memory 1910 is configured to store computer programs, the transceiver 1920 is configured to transmit and receive data under the control of the processor 1930, and the processor 1930 is configured to read the computer programs stored in the memory 1910 and perform the following operation: receiving a first signal sent by a second wireless communication node in a first state, in which the first signal is sent in response to first indication information of the first wireless communication node.

In an implementation of the embodiment of the invention, the first indication information is sent by the first wireless communication node according to first reference information. The first reference information includes at least one of the following: location information of a terminal device connected to the first wireless communication node; a first result of signal measurement of the terminal device; grade indication information corresponding to the first result; or switching probability indication information of the terminal device.

The first result is used to indicate at least one of an SINR, an RSRP, an RSRQ or an RSSI.

In an implementation of the embodiment of the invention, in a case where the first reference information includes the first result, the processor 1930 is configured to: obtain the first result by measuring a second signal sent by the first wireless communication node, and send the first result to the first wireless communication node.

The second signal includes at least one of an SSB, a CSI-RS or a PRS.

In an implementation of the embodiment of the invention, when sending the first result to the first wireless communication node, the processor 1930 is configured to: in response to determining that the first result is greater than or equal to a first threshold, send the first result to the first wireless communication node, or in response to determining that the first result is less than or equal to the first threshold, send the first result to the first wireless communication node.

In an implementation of the embodiment of the invention, the processor 1930 is configured to: receive the first threshold sent by the first wireless communication node.

In an implementation of the embodiment of the invention, in a case where the first reference information includes the first result, the processor 1930 is configured to: send an uplink signal to the first wireless communication node, in which the uplink signal is measured by the first wireless communication node to obtain the first result.

In an implementation of the embodiment of the invention, in a case where the first reference information includes the location information, the processor 1930 is configured to: send the location information of the terminal device to the first wireless communication node.

The location information includes at least one of the following: coordinate information of the terminal device; relative coordinate information of the terminal device with respect to a first reference point; distance information of the terminal device with respect to the first reference point; or direction information of the terminal device with respect to the first reference point.

The first reference point is at least one of a reference terminal device, a reference wireless communication node or the first wireless communication node.

In an implementation of the embodiment of the invention, the processor 1930 is configured to: receive location information of the first reference point sent by the first wireless communication node, in which the location information of the first reference point is used to indicate a location where the first reference point is located and/or a second location range covered by the first reference point.

In an implementation of the embodiment of the invention, when sending the location information of the terminal device to the first wireless communication node, the processor 1930 is configured to: send the location information of the terminal device to the first wireless communication node according to a first location range, in which the first location range is a first coordinate range, in which the location information is sent to the first wireless communication node in response to determining that a coordinate of the terminal device is within or outside the first coordinate range; or the first location range is a first relative coordinate range, in which the location information is sent to the first wireless communication node in response to determining that a relative coordinate of the terminal device with respect to the first reference point is within or outside the first relative coordinate range; or the first location range is a first distance, in which the location information is sent to the first wireless communication node in response to determining that a distance of the terminal device with respect to the first reference point is less than or equal to the first distance; or the first location range is a first distance, in which the location information is sent to the first wireless communication node in response to determining that the distance of the terminal device with respect to the first reference point is greater than or equal to the first distance.

In an implementation of the embodiment of the invention, the processor 1930 is configured to: receive the first location range sent by the first wireless communication node.

In an implementation of the embodiment of the invention, in a case where the first reference information includes the grade indication information, the processor 1930 is configured to: determine the grade indication information according to a result range corresponding to the first result of the terminal device, and/or, according to a distance range corresponding to a distance between the terminal device and the first wireless communication node, and send the grade indication information to the first wireless communication node.

In an implementation of the embodiment of the invention, when sending the grade indication information to the first wireless communication node, the processor 1930 is configured to: in response to the grade indication information being less than or equal to a first grade threshold, send the grade indication information to the first wireless communication node; or in response to the grade indication information being greater than or equal to the first grade threshold, send the grade indication information to the first wireless communication node.

In an implementation of the embodiment of the invention, the processor 1930 is configured to: receive the first grade threshold sent by the first wireless communication node.

In an implementation of the embodiment of the invention, in a case where the first reference information includes the switching probability indication information, the processor 1930 is configured to: determine the switching probability indication information according to the first result of the terminal device, and/or, according to the location information of the terminal device, and/or, according to the grade indication information of the terminal device, and send the switching probability indication information to the first wireless communication node.

In an implementation of the embodiment of the invention, when sending the switching probability indication information to the first wireless communication node, the processor 1930 is configured to: in response to determining that the switching probability indication information is greater than or equal to a first probability threshold, send the switching probability indication information to the first wireless communication node; or in response to determining that the switching probability indication information is less than or equal to the first probability threshold, send the switching probability indication information to the first wireless communication node.

In an implementation of the embodiment of the invention, the processor 1930 is configured to: receive the first probability threshold sent by the first wireless communication node.

In an implementation of the embodiment of the invention, the processor 1930 is configured to: receive first resource configuration information of the first signal configured by the first wireless communication node. Receiving the first signal sent by the second wireless communication node in the first state includes: receiving the first signal sent by the second wireless communication node in the first state according to the first resource configuration information.

In an implementation of the embodiment of the invention, the processor 1930 is configured to: receive second resource configuration information of the first signal sent by the first wireless communication node, in which the second resource configuration information is resource configuration information sent by the second wireless communication node to the first wireless communication node, and receive the first signal sent by the second wireless communication node in the first state according to the second resource configuration information.

In an implementation of the embodiment of the invention, the processor 1930 is configured to: send second reference information to the first wireless communication node, in which the second reference information is used for sending second indication information to the second wireless communication node, the second indication information is configured to indicate that the second wireless communication node is in a second state, and the second state is one of an activated state, an open state, and a communicative state. The second reference information includes at least one of following: a first result of signal measurement of the terminal device; grade indication information corresponding to the first result; a second result obtained by measuring the first signal by the terminal device; grade indication information corresponding to the second result; switching probability indication information indicating a switching probability of the terminal device switching to the second wireless communication node; or location information of the terminal device.

It should be noted that the communication device provided by the embodiments of the invention is capable of realizing all the steps in the method embodiment of FIG. 16 above and achieving the same technical effects, and the contents in the embodiment that are the same as in the method embodiments and the corresponding beneficial effects will not be specifically repeated herein.

Corresponding to the method for sending a signal provided in the above-described embodiments of FIGS. 1-14, the invention also provides an apparatus for sending a signal. Since the apparatus for sending a signal provided in the embodiment of the invention corresponds to the method for sending a signal provided in the above-described embodiments of FIGS. 1-14, the implementations of the method for sending a signal are also applicable to the apparatus for sending a signal provided in the embodiment of the invention, which will not be described in detail in the embodiments of the invention.

FIG. 20 is a block diagram of an apparatus 2000 for sending a signal according to an embodiment of the invention.

As illustrated in FIG. 20, the apparatus 2000 includes: a first sending unit 2010.

The first sending unit 2010 is configured to send first indication information to a second wireless communication node in a first state, in which the first state is one of a deactivated state, a closed state, or an incommunicable state, and the first indication information is used to instruct the second wireless communication node to send a first signal.

In an implementation of the invention, the first sending unit 2010 is configured to: send the first indication information to the second wireless communication node in the first state according to first reference information. The first reference information includes at least one of the following: location information of a terminal device connected to the first wireless communication node; a first result of signal measurement of the terminal device; grade indication information corresponding to the first result; or switching probability indication information of the terminal device.

In an implementation of the invention, in a case where the first reference information includes the first result, the apparatus includes: the first receiving unit, configured to receive the first result, in which the first result is obtained by measuring a second signal sent by the first wireless communication node.

In an implementation of the invention, the first sending unit 2010 is configured to: send a first threshold to the terminal device, in which in response to determining that the first result is greater than or equal to the first threshold, the terminal device sends the first result to the first wireless communication node; or in response to determining that the first result is less than or equal to the first threshold, the terminal device sends the first result to the first wireless communication node.

In an implementation of the invention, in a case where the first reference information includes the first result, the apparatus includes: a first measuring unit, configured to obtain the first result by measuring an uplink signal sent by the terminal device.

In an implementation of the invention, the second signal includes at least one of an SSB, a CSI-RS or a PRS.

In an implementation of the invention, the uplink signal includes an SRS.

In an implementation of the invention, the first result is used to indicate at least one of an SINR, an RSRP, an RSRQ or an RSSI.

In an implementation of the invention, in a case where the first reference information includes the first result, the first sending unit 2010 is configured to: in response to a first result corresponding to at least one terminal device being less than or equal to a second threshold, and/or, a number of terminal devices whose first results are less than or equal to the second threshold being greater than or equal to a first number, send the first indication information to the second wireless communication node.

In an implementation of the invention, in a case where the first reference information includes the location information, the apparatus includes: a first determining unit, configured to determine the location information of the terminal device by positioning the terminal device; and/or, the first receiving unit, configured to receive the location information sent by the terminal device; and/or, the first receiving unit, configured to receive the location information sent by a network element for positioning the terminal device.

In an implementation of the invention, in a case where the first reference information includes the location information, the location information includes at least one of the following: coordinate information of the terminal device; relative coordinate information of the terminal device with respect to a first reference point; distance information of the terminal device with respect to the first reference point; or direction information of the terminal device with respect to the first reference point.

In an implementation of the invention, the first reference point is at least one of a reference terminal device, a reference wireless communication node or the first wireless communication node.

In an implementation of the invention, the first sending unit 2010 is configured to: send location information of the first reference point to the terminal device, in which the location information of the first reference point is used to indicate a location where the first reference point is located, and/or, a second location range covered by the first reference point.

In an implementation of the invention, the first sending unit 2010 is configured to: send a first location range to the terminal device, in which the first location range is a first coordinate range, in which the location information is sent to the first wireless communication node in response to determining that a coordinate of the terminal device is within or outside the first coordinate range; or the first location range is a first relative coordinate range, in which the location information is sent to the first wireless communication node in response to determining that a relative coordinate of the terminal device with respect to the first reference point is within or outside the first relative coordinate range; or the first location range is a first distance, in which the location information is sent to the first wireless communication node in response to determining that a distance of the terminal device with respect to the first reference point is less than or equal to the first distance; or the first location range is a first distance, in which the location information is sent to the first wireless communication node in response to determining that the distance of the terminal device with respect to the first reference point is greater than or equal to the first distance.

In an implementation of the invention, the first sending unit 2010 is configured to: in response to determining, according to the location information of the terminal device, that a distance between at least one terminal device and the first wireless communication node is greater than or equal to a distance threshold according to the location information of the terminal device, and/or that a number of terminal devices whose distances to the first wireless communication node are greater than or equal to the distance threshold is greater than or equal to a second number, send the first indication information to the second wireless communication node; and/or in response to determining, according to the location information of the terminal device, that at least one terminal device is not within a second location range, and/or that a number of terminal devices that are not within the second location range is greater than a third number, send the first indication information to the second wireless communication node.

In an implementation of the invention, in a case where the first reference information includes the grade indication information, the first determining unit is configured to: determine the grade indication information according to a result range corresponding to the first result of the terminal device, and/or, according to a distance range corresponding to a distance between the terminal device and the first wireless communication node.

In an implementation of the invention, in a case where the first reference information includes the grade indication information of the terminal device, the first receiving unit is configured to: receive the grade indication information sent by the terminal device, in which the grade indication information is determined according to the result range corresponding to the first result of the terminal device, and/or, according to the distance range corresponding to the distance between the terminal device and the first wireless communication node.

In an implementation of the invention, the first sending unit is configured to: send a first grade threshold to the terminal device, in which the first grade threshold is used for the terminal device to send the grade indication information to the first wireless communication node in a case where the grade indication information is less than or equal to the first grade threshold, or the first grade threshold is used for the terminal device to send the grade indication information to the first wireless communication node in a case where the grade indication information is greater than or equal to the first grade threshold.

In an implementation of the invention, in a case where the first reference information includes the grade indication information of the terminal device, according to the first reference information, the first sending unit 2010 is configured to: in response to a grade corresponding to the first result of at least one terminal device being less than or equal to a second grade threshold, and/or, a number of terminal devices whose grades are less than or equal to the second grade threshold being greater than a fourth number, send the first indication information to the second wireless communication node in the first state.

In an implementation of the invention, in a case where the first reference information includes the switching probability indication information, the first determining unit is configured to: determine the switching probability indication information according to the first result of the terminal device, and/or, according to the location information of the terminal device, and/or, according to the grade indication information of the terminal device.

In an implementation of the invention, in a case where the first reference information includes the switching probability indication information of the terminal device, the first receiving unit is configured to: receive the switching probability indication information sent by the terminal device, in which the switching probability indication information is determined according to the first result of the terminal device, and/or, according to the location information of the terminal device, and/or, according to the grade indication information of the terminal device.

In an implementation of the invention, the first sending unit 2010 is configured to: send a first probability threshold to the terminal device, in which the first probability threshold is used for the terminal device to send the switching probability indication information to the first wireless communication node in response to determining that a switching probability of the terminal device is greater than or equal to the first probability threshold, or the first probability threshold is used for the terminal device to send the switching probability indication information to the first wireless communication node in response to determining that the switching probability is less than or equal to the first probability threshold.

In an implementation of the invention, in a case where the first reference information includes the switching probability indication information of the terminal device, the first sending unit 2010 is configured to: in response to a switching probability of at least one terminal device being greater than or equal to a second probability threshold, or, a number of terminal devices whose switching probabilities are greater than or equal to the second probability threshold being greater than or equal a fifth number, send the first indication information to the second wireless communication node in the first state.

In an implementation of the invention, the first sending unit 2010 is configured to: send first resource configuration information of the first signal to the second wireless communication node and the terminal device, in which the first resource configuration information is used for determining a resource occupied by the first signal.

In an implementation of the invention, the first receiving unit is configured to: receive second resource configuration information of the first signal sent by the second wireless communication node, and send the second resource configuration information of the first signal to the terminal device, in which the second resource configuration information is used to determine a resource occupied by the first signal.

In an implementation of the invention, the first sending unit 2010 is configured to: send second indication information to the second wireless communication node according to second reference information, in which the second indication information is used to indicate that the second wireless communication node is in a second state, and the second state is one of an activated state, an open state or a communicative state. The second reference information includes at least one of the following: a first result of signal measurement of the terminal device; grade indication information corresponding to the first result; a second result obtained by measuring the first signal by the terminal device; grade indication information corresponding to the second result; switching probability indication information indicating a switching probability of the terminal device switching to the second wireless communication node; or location information of the terminal device.

Corresponding to the method for sending a signal provided in the above-described embodiment of FIG. 15, the invention also provides an apparatus for sending a signal. Since the apparatus for sending a signal provided in the embodiment of the invention corresponds to the method for sending a signal provided in the above-described embodiment of FIG. 15, the implementations of the method for sending a signal are also applicable to the apparatus for sending a signal provided in the embodiment of the invention, which will not be described in detail in the embodiments of the invention.

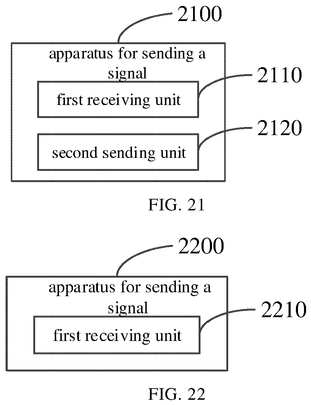

FIG. 21 is a block diagram of an apparatus for sending a signal according to an embodiment of the invention.

As illustrated in FIG. 21, the apparatus 2100 for sending a signal includes: a first receiving unit 2110 and a second sending unit 2120.

The first receiving unit 2110 is configured to receive first indication information sent by a first wireless communication node to a second wireless communication node in a first state. The second sending unit 2120 is configured to, in response to the first indication information, send a first signal, in which the first state is one of a deactivated state, a closed state, or an incommunicable state.

In an implementation of the invention, the first indication information is sent according to first reference information. The first reference information includes at least one of the following: location information of a terminal device connected to the first wireless communication node; a first result of signal measurement of the terminal device; grade indication information corresponding to the first result; or switching probability indication information of the terminal device.

In an implementation of the embodiment of the invention, the first indication information is sent according to first reference information. The first reference information includes at least one of the following: location information of a terminal device connected to the first wireless communication node; a first result of signal measurement of the terminal device; grade indication information corresponding to the first result; or switching probability indication information of the terminal device.

In an implementation of the embodiment of the invention, the first receiving unit 2110 is configured to receive first resource configuration information of the first signal sent by the first wireless communication node. The second sending unit 2120 is configured to send the first signal according to a resource indicated by the first resource configuration information.

In an implementation of the embodiment of the invention, the second sending unit 2120 is configured to: send second resource configuration information to the first wireless communication node according to a resource of the first signal, in which the second resource configuration information is used to determine the resource occupied by the first signal.

In an implementation of the embodiment of the invention, the first receiving unit 2110 is configured to: receive second indication information sent by the first wireless communication node, in which in response to the second indication information, the second wireless communication node is in a second state, and the second state is one of an activated state, an open state or a communicative state.

In an implementation of the embodiment of the invention, the second indication information is sent according to second reference information. The second reference information includes at least one of the following: a first result of signal measurement of the terminal device; grade indication information corresponding to the first result; a second result obtained by measuring the first signal by the terminal device; grade indication information corresponding to the second result; switching probability indication information indicating a switching probability of the terminal device switching to the second wireless communication node; or location information of the terminal device.

Corresponding to the method for sending a signal provided in the above-described embodiment of FIG. 16, the invention also provides an apparatus for sending a signal. Since the apparatus for sending a signal provided in the embodiment of the invention corresponds to the method for sending a signal provided in the above-described embodiment of FIG. 16, the implementations of the method for sending a signal are also applicable to the apparatus for sending a signal provided in the embodiment of the invention, which will not be described in detail in the embodiments of the invention.

FIG. 22 is a block diagram of an apparatus for sending a signal according to an embodiment of the invention.

As illustrated in FIG. 22, the apparatus 2200 for sending a signal includes: a second receiving unit 2210.

The second receiving unit 2210 is configured to receive a first signal sent by a second wireless communication node in a first state, in which the first signal is sent in response to first indication information of the first wireless communication node.

In an implementation of the embodiment of the invention, the first indication information is sent according to first reference information. The first reference information includes at least one of the following: location information of a terminal device connected to the first wireless communication node; a first result of signal measurement of the terminal device; grade indication information corresponding to the first result; or switching probability indication information of the terminal device.

The first result is used to indicate at least one of an SINR, an RSRP, an RSRQ or an RSSI.

In an implementation of the embodiment of the invention, in a case where the first reference information includes the first result, the apparatus includes: a measuring module and a first sending unit. The measuring module is configured to obtain the first result by measuring a second signal sent by the first wireless communication node. The first sending unit is configured to send the first result to the first wireless communication node.

The second signal includes at least one of an SSB, a CSI-RS or a PRS.

In an implementation of the embodiment of the invention, the first sending unit is configured to: in response to determining that the first result is greater than or equal to a first threshold, send the first result to the first wireless communication node; or, in response to determining that the first result is less than or equal to the first threshold, send the first result to the first wireless communication node.

In an implementation of the embodiment of the invention, the first receiving unit is configured to: receive the first threshold sent by the first wireless communication node.

In an implementation of the embodiment of the invention, in a case where the first reference information includes the first result, the first sending unit is configured to: send an uplink signal to the first wireless communication node, in which the uplink signal is measured by the first wireless communication node to obtain the first result.

In an implementation of the embodiment of the invention, in a case where the first reference information includes the location information, the first sending unit is configured to: send the location information of the terminal device to the first wireless communication node.

The location information includes at least one of the following: coordinate information of the terminal device; relative coordinate information of the terminal device with respect to a first reference point; distance information of the terminal device with respect to the first reference point; or direction information of the terminal device with respect to the first reference point.

The first reference point is at least one of a reference terminal device, a reference wireless communication node or the first wireless communication node.

In an implementation of the embodiment of the invention, the second receiving unit 2210 is configured to: receive location information of the first reference point sent by the first wireless communication node, in which the location information of the first reference point is used to indicate a location where the first reference point is located and/or a second location range covered by the first reference point.

In an implementation of the embodiment of the invention, the first sending unit is configured to: send the location information of the terminal device to the first wireless communication node according to a first location range, in which the first location range is a first coordinate range, in which the location information is sent to the first wireless communication node in response to determining that a coordinate of the terminal device is within or outside the first coordinate range; or the first location range is a first relative coordinate range, in which the location information is sent to the first wireless communication node in response to determining that a relative coordinate of the terminal device with respect to the first reference point is within or outside the first relative coordinate range; or the first location range is a first distance, in which the location information is sent to the first wireless communication node in response to determining that a distance of the terminal device with respect to the first reference point is less than or equal to the first distance; or the first location range is a first distance, in which the location information is sent to the first wireless communication node in response to determining that the distance of the terminal device with respect to the first reference point is greater than or equal to the first distance.

In an implementation of the embodiment of the invention, the second receiving unit 2210 is configured to: receive the first location range sent by the first wireless communication node.

In an implementation of the embodiment of the invention, in a case where the first reference information includes the grade indication information, the first sending unit is configured to: determine the grade indication information according to a result range corresponding to the first result of the terminal device, and/or, according to a distance range corresponding to a distance between the terminal device and the first wireless communication node, and send the grade indication information to the first wireless communication node.

In an implementation of the embodiment of the invention, the first sending unit is configured to: in response to the grade indication information being less than or equal to a first grade threshold, send the grade indication information to the first wireless communication node; or in response to the grade indication information being greater than or equal to the first grade threshold, send the grade indication information to the first wireless communication node.

In an implementation of the embodiment of the invention, the second receiving unit 2210 is configured to: receive the first grade threshold sent by the first wireless communication node.

In an implementation of the embodiment of the invention, in a case where the first reference information includes the switching probability indication information, the first sending unit is configured to: determine the switching probability indication information according to the first result of the terminal device, and/or, according to the location information of the terminal device, and/or, according to the grade indication information of the terminal device, and send the switching probability indication information to the first wireless communication node.

In an implementation of the embodiment of the invention, the first sending unit is configured to: in response to determining that the switching probability indication information is greater than or equal to a first probability threshold, send the switching probability indication information to the first wireless communication node; or in response to determining that the switching probability indication information is less than or equal to the first probability threshold, send the switching probability indication information to the first wireless communication node.

In an implementation of the embodiment of the invention, the second receiving unit 2210 is configured to: receive the first probability threshold sent by the first wireless communication node.

In an implementation of the embodiment of the invention, the second receiving unit 2210 is configured to: receive first resource configuration information of the first signal configured by the first wireless communication node, or receive the first signal sent by the second wireless communication node in the first state according to the first resource configuration information.

In an implementation of the embodiment of the invention, the second receiving unit 2210 is configured to: receive second resource configuration information of the first signal sent by the first wireless communication node, in which the second resource configuration information is resource configuration information sent by the second wireless communication node to the first wireless communication node, and receive the first signal sent by the second wireless communication node in the first state according to the second resource configuration information.

In an implementation of the embodiment of the invention, the first sending unit is configured to: send second reference information to the first wireless communication node, in which the second reference information is used for sending second indication information to the second wireless communication node, the second indication information is used to indicate that the second wireless communication node is in a second state, and the second state is one of an activated state, an open state, or a communicative state. The second reference information includes at least one of the following: a first result of signal measurement of the terminal device; grade indication information corresponding to the first result; a second result obtained by measuring the first signal by the terminal device; grade indication information corresponding to the second result; switching probability indication information indicating a switching probability of the terminal device switching to the second wireless communication node; or location information of the terminal device.

It is noted that the above-described apparatus for sending a signal provided by the embodiments of the invention is capable of achieving all the method steps implemented in the method embodiment of FIG. 16 above, and achieving the same technical effects, and the same parts and beneficial effects of the method embodiments in the embodiments will not be specifically described herein.

It should be noted that each functional unit in various embodiments of the invention may be integrated in one processing unit, or each unit may be physically present separately, or two or more units may be integrated in one unit. The above integrated units can be implemented either in the form of hardware or in the form of software functional units.

Integrated units can be stored in a processor-readable storage medium if they are implemented in the form of software functional units and sold or used as independent products. Based on this understanding, the essence of the technical solutions of the invention, parts of the technical solution of the invention that contribute to the related art, or all or part of the technical solution of the invention can be embodied in the form of software products. The computer software product is stored in a storage medium and includes several instructions to make a computer device (which can be a personal computer, a server, and a network device, etc.) or a processor perform all or part of the steps of the methods of various embodiments of the invention. The above storage medium includes: an USB flash drive, a mobile hard drive, a Read-Only Memory (ROM), a Random Access Memory (RAM), a disk or a CD-ROM, and other mediums that can store program codes.

To implement the above embodiments, the invention also provides a processor-readable storage medium.

The processor-readable storage medium stores computer programs that are used to cause a processor to implement the method for sending a signal of any one of the embodiments of FIGS. 1-14 of the invention.

The processor-readable storage medium may be any available medium or data storage device that the processor can access, including but not limited to magnetic memory (e.g., floppy disk, hard disk, magnetic tape, magnetic optical disk (MO), etc.), optical memory (e.g., CD, DVD, BD, HVD, etc.), and semiconductor memory (e.g., ROM, EPROM, EEPROM, non-volatile memory (NAND FLASH), solid state drive (SSD)), etc.

In order to implement the embodiments of the invention, the invention also provides a processor-readable storage medium having computer programs stored thereon.

The computer programs are configured to cause a processor to implement the method for sending a signal described in the embodiment of FIG. 15 of the invention.

The processor-readable storage medium may be any available medium or data storage device that the processor can access, including but not limited to magnetic memory (e.g., floppy disk, hard disk, magnetic tape, MO, etc.), optical memory (e.g., CD, DVD, BD, HVD, etc.), and semiconductor memory (e.g., ROM, EPROM, EEPROM, NAND FLASH, SSD), etc.

In order to implement the embodiments of the invention, the invention also provides a processor-readable storage medium having computer programs stored thereon.

The computer programs are configured to cause a processor to implement the method for sending a signal described in the embodiment of FIG. 16 of the invention.

The processor-readable storage medium may be any available medium or data storage device that the processor can access, including but not limited to magnetic memory (e.g., floppy disk, hard disk, magnetic tape, MO, etc.), optical memory (e.g., CD, DVD, BD, HVD, etc.), and semiconductor memory (e.g., ROM, EPROM, EEPROM, NAND FLASH, SSD), etc.

Those skilled in the art understand that the embodiments of the invention may be provided as methods, systems, or computer program products. Therefore, the invention may provide the embodiments in the form of entire hardware, the embodiments in the form of entire software, or the embodiments in the form of software and hardware. Moreover, the invention may take the form of a computer program product implemented on one or more computer-usable storage mediums (including, but not limited to, a disk memory and an optical memory) that contain computer-usable program codes therein.

The invention is described with reference to the flowcharts and/or the block diagrams of the methods, the devices (systems), and the computer program products according to the embodiments of the invention. It is understood that each process and/or box in the flowchart and/or block diagram, and the combination of processes and/or boxes in the flowchart and/or the block diagram, may be implemented by the computer-executable instructions. These computer-executable instructions may be provided to a processor of a general computer, a specialized computer, an embedded processor, or other programmable data processing devices to produce a machine, such that the instructions executed by the processor of the computer or other programmable data processing devices can produce a device for implementing the functions specified in one or more processes of the flowchart and/or one or more boxes of the block diagram.

These processor-executable instructions may also be stored in a processor-readable memory capable of directing a computer or other programmable data processing devices to operate in a particular manner, such that the instructions stored in the processor-readable memory produce an article of manufacture including an instruction device. The instruction device implements the functions specified in one or more processes of the flowchart and/or one or more boxes of the block diagram.

These processor-executable instructions may also be loaded onto a computer or other programmable data processing devices, such that a series of operational steps are performed on the computer or other programmable devices to produce computer-implemented processes. The instructions executed on the computer or other programmable devices provide steps for implementing the functions specified in one or more processes of the flowchart and/or one or more boxes of the block diagram.

Obviously, those skilled in the art can make various changes and modifications to the invention without departing from the spirit and scope of the invention. If these changes and modifications of the invention fall within the scope of the claims of the invention and their technical equivalents, the invention is intended to include such changes and modifications.

## Claims

1. A method for sending a signal, performed by a first wireless communication node, comprising:
sending first indication information to a second wireless communication node in a first state, wherein the first state is one of a deactivated state, a closed state, or an incommunicable state, and the first indication information is configured to instruct the second wireless communication node to send a first signal.

2. The method of claim 1, wherein sending the first indication information to the second wireless communication node in the first state, comprises:
sending the first indication information to the second wireless communication node in the first state according to first reference information;
wherein the first reference information comprises at least one of following:
location information of a terminal device connected to the first wireless communication node;
a first result of signal measurement of the terminal device;
grade indication information corresponding to the first result; or
switching probability indication information of the terminal device.

3. The method of claim 2, wherein in a case where the first reference information comprises the first result, the method further comprises:
receiving the first result, wherein the first result is obtained by measuring a second signal sent by the first wireless communication node.

4. The method of claim 3, further comprising:
sending a first threshold to the terminal device;
wherein in response to determining that the first result is greater than or equal to the first threshold, the terminal device sends the first result to the first wireless communication node; or,
in response to determining that the first result is less than or equal to the first threshold, the terminal device sends the first result to the first wireless communication node.

5. The method of claim 2, wherein in a case where the first reference information comprises the first result, the method further comprises:
obtaining the first result by measuring an uplink signal sent by the terminal device.

6. The method of claim 2, wherein in a case where the first reference information comprises the first result, sending the first indication information to the second wireless communication node in the first state according to the first reference information, comprises:
in response to a first result corresponding to at least one terminal device being less than or equal to a second threshold, and/or, a number of terminal devices whose first results are less than or equal to the second threshold being greater than or equal to a first number, sending the first indication information to the second wireless communication node.

7. The method of claim 2, wherein in a case where the first reference information comprises the location information, the method further comprises:
determining the location information of the terminal device by positioning the terminal device; and/or
receiving the location information sent by the terminal device; and/or
receiving the location information sent by a network element for positioning the terminal device.

8. The method of claim 2, wherein the location information comprises at least one of following:
coordinate information of the terminal device;
relative coordinate information of the terminal device with respect to a first reference point;
distance information of the terminal device with respect to the first reference point; or
direction information of the terminal device with respect to the first reference point;
wherein the first reference point is at least one of a reference terminal device, a reference wireless communication node or the first wireless communication node.

9. The method of claim 8, further comprising:
sending location information of the first reference point to the terminal device;
wherein the location information of the first reference point is configured to indicate a location where the first reference point is located, and/or, a second location range covered by the first reference point.

10. The method of claim 8, further comprising:
sending a first location range to the terminal device;
wherein the first location range is a first coordinate range, wherein the location information is sent to the first wireless communication node in response to determining that a coordinate of the terminal device is within or outside the first coordinate range; or
the first location range is a first relative coordinate range, wherein the location information is sent to the first wireless communication node in response to determining that a relative coordinate of the terminal device with respect to the first reference point is within or outside the first relative coordinate range; or
the first location range is a first distance, wherein the location information is sent to the first wireless communication node in response to determining that a distance of the terminal device with respect to the first reference point is less than or equal to the first distance; or
the first location range is a first distance, wherein the location information is sent to the first wireless communication node in response to determining that the distance of the terminal device with respect to the first reference point is greater than or equal to the first distance.

11. The method of claim 2, wherein sending the first indication information to the second wireless communication node in the first state according to the first reference information, comprises:
in response to determining, according to the location information of the terminal device, that a distance between at least one terminal device and the first wireless communication node is greater than or equal to a distance threshold according to the location information of the terminal device, and/or that a number of terminal devices whose distances to the first wireless communication node are greater than or equal to the distance threshold is greater than or equal to a second number, sending the first indication information to the second wireless communication node; and/or
in response to determining, according to the location information of the terminal device, that at least one terminal device is not within a second location range, and/or that a number of terminal devices that are not within the second location range is greater than a third number, sending the first indication information to the second wireless communication node.

12. The method of claim 2, wherein in a case where the first reference information comprises the grade indication information, the method further comprises:
determining the grade indication information according to a result range corresponding to the first result of the terminal device, and/or, according to a distance range corresponding to a distance between the terminal device and the first wireless communication node; or
receiving the grade indication information sent by the terminal device;
wherein the grade indication information is determined according to the result range corresponding to the first result of the terminal device, and/or, according to the distance range corresponding to the distance between the terminal device and the first wireless communication node.

13. The method of claim 12, further comprising:
sending a first grade threshold to the terminal device;
wherein the first grade threshold is used for the terminal device to send the grade indication information to the first wireless communication node in a case where the grade indication information is less than or equal to the first grade threshold; or
the first grade threshold is used for the terminal device to send the grade indication information to the first wireless communication node in a case where the grade indication information is greater than or equal to the first grade threshold.

14. The method of claim 2, wherein in a case where the first reference information comprises the grade indication information of the terminal device, and sending the first indication information to the second wireless communication node in the first state according to the first reference information, comprises:
in response to a grade corresponding to the first result of at least one terminal device being less than or equal to a second grade threshold, and/or, a number of terminal devices whose grades are less than or equal to the second grade threshold being greater than a fourth number, sending the first indication information to the second wireless communication node in the first state.

15. The method of claim 2, wherein in a case where the first reference information comprises the switching probability indication information, the method further comprises:
determining the switching probability indication information according to the first result of the terminal device, and/or, according to the location information of the terminal device, and/or, according to the grade indication information of the terminal device; or
receiving the switching probability indication information sent by the terminal device; wherein the switching probability indication information is determined according to the first result of the terminal device, and/or, according to the location information of the terminal device, and/or, according to the grade indication information of the terminal device.

16. The method of claim 15, further comprising:
sending a first probability threshold to the terminal device;
wherein the first probability threshold is used for the terminal device to send the switching probability indication information to the first wireless communication node in response to determining that a switching probability of the terminal device is greater than or equal to the first probability threshold; or
the first probability threshold is used for the terminal device to send the switching probability indication information to the first wireless communication node in response to determining that the switching probability is less than or equal to the first probability threshold.

17. The method of claim 2, wherein in a case where the first reference information comprises the switching probability indication information of the terminal device, sending the first indication information to the second wireless communication node in the first state according to the first reference information, comprises:
in response to a switching probability of at least one terminal device being greater than or equal to a second probability threshold, or, a number of terminal devices whose switching probabilities are greater than or equal to the second probability threshold being greater than or equal a fifth number, sending the first indication information to the second wireless communication node in the first state.

18. The method of claim 1, further comprising:
sending first resource configuration information of the first signal to the second wireless communication node and the terminal device;
wherein the first resource configuration information is used for determining a resource occupied by the first signal.

19. The method of claim 1, further comprising:
receiving second resource configuration information of the first signal sent by the second wireless communication node; and
sending the second resource configuration information of the first signal to the terminal device, wherein the second resource configuration information is used for determining a resource occupied by the first signal.

20. The method of claim 1, further comprising:
sending second indication information to the second wireless communication node according to second reference information, wherein the second indication information is configured to indicate that the second wireless communication node is in a second state, and the second state is one of an activated state, an open state and a communicative state;
wherein the second reference information comprises at least one of following:
a first result of signal measurement of the terminal device;
grade indication information corresponding to the first result;
a second result obtained by measuring the first signal by the terminal device;
grade indication information corresponding to the second result;
switching probability indication information indicating a switching probability of the terminal device switching to the second wireless communication node; or
location information of the terminal device.

21. A method for sending a signal, performed by a second wireless communication node, comprising:
receiving first indication information sent by a first wireless communication node to the second wireless communication node in a first state; and
in response to the first indication information, sending a first signal;
wherein the first state is one of a deactivated state, a closed state, or an incommunicable state.

22. The method of claim 21, wherein the first indication information is sent according to first reference information;
wherein the first reference information comprises at least one of following:
location information of a terminal device connected to the first wireless communication node;
a first result of signal measurement of the terminal device;
grade indication information corresponding to the first result; or
switching probability indication information of the terminal device.

23. The method of claim 21 or 22, further comprising:
receiving first resource configuration information of the first signal sent by the first wireless communication node; and
sending the first signal according to a resource indicated by the first resource configuration information.

24. The method of claim 21 or 22, further comprising:
sending second resource configuration information to the first wireless communication node according to a resource of the first signal;
wherein the second resource configuration information is used for determining the resource occupied by the first signal.

25. The method of claim 21, further comprising:
receiving second indication information sent by the first wireless communication node;
wherein in response to the second indication information, the second wireless communication node is in a second state, and the second state is one of an activated state, an open state and a communicative state.

26. The method of claim 25, wherein the second indication information is sent according to second reference information, and the second reference information comprises at least one of following:
a first result of signal measurement of the terminal device;
grade indication information corresponding to the first result;
a second result obtained by measuring the first signal by the terminal device;
grade indication information corresponding to the second result;
switching probability indication information indicating a switching probability of the terminal device switching to the second wireless communication node; or
location information of the terminal device.

27. A method for sending a signal, performed by a terminal device connected to a first wireless communication node, comprising:
receiving a first signal sent by a second wireless communication node in a first state;
wherein the first signal is sent in response to first indication information of the first wireless communication node.

28. The method of claim 27, wherein the first indication information is sent by the first wireless communication node according to first reference information, and the first reference information comprises at least one of following:
location information of the terminal device;
a first result of signal measurement of the terminal device;
grade indication information corresponding to the first result; or
switching probability indication information of the terminal device.

29. The method of claim 28, wherein in a case where the first reference information comprises the first result, the method further comprises:
obtaining the first result by measuring a second signal sent by the first wireless communication node; and
sending the first result to the first wireless communication node.

30. The method of claim 29, wherein sending the first result to the first wireless communication node, comprises:
in response to determining that the first result is greater than or equal to a first threshold, sending the first result to the first wireless communication node; or,
in response to determining that the first result is less than or equal to the first threshold, sending the first result to the first wireless communication node.

31. The method of claim 30, further comprising:
receiving the first threshold sent by the first wireless communication node.

32. The method of claim 28, wherein in a case where the first reference information comprises the first result, the method further comprises:
sending an uplink signal to the first wireless communication node, wherein the uplink signal is measured by the first wireless communication node to obtain the first result.

33. The method of claim 28, wherein in a case where the first reference information comprises the location information, the method further comprises:
sending the location information of the terminal device to the first wireless communication node.

34. The method of claim 33, wherein the location information comprises at least one of following:
coordinate information of the terminal device;
relative coordinate information of the terminal device with respect to a first reference point;
distance information of the terminal device with respect to the first reference point; or
direction information of the terminal device with respect to the first reference point;
wherein the first reference point is at least one of a reference terminal device, a reference wireless communication node or the first wireless communication node.

35. The method of claim 34, further comprising:
receiving location information of the first reference point sent by the first wireless communication node;
wherein the location information of the first reference point is configured to indicate a location where the first reference point is located, and/or, a second location range covered by the first reference point.

36. The method of claim 33, wherein sending the location information of the terminal device to the first wireless communication node, comprises:
sending the location information of the terminal device to the first wireless communication node according to a first location range;
wherein the first location range is a first coordinate range, wherein the location information is sent to the first wireless communication node in response to determining that a coordinate of the terminal device is within or outside the first coordinate range; or
the first location range is a first relative coordinate range, wherein the location information is sent to the first wireless communication node in response to determining that a relative coordinate of the terminal device with respect to the first reference point is within or outside the first relative coordinate range; or
the first location range is a first distance, wherein the location information is sent to the first wireless communication node in response to determining that a distance of the terminal device with respect to the first reference point is less than or equal to the first distance; or
the first location range is a first distance, wherein the location information is sent to the first wireless communication node in response to determining that the distance of the terminal device with respect to the first reference point is greater than or equal to the first distance.

37. The method of claim 34, further comprising:
receiving a first location range sent by the first wireless communication node.

38. The method of claim 34, wherein in a case where the first reference information comprises the grade indication information, the method further comprises:
determining the grade indication information according to a result range corresponding to the first result of the terminal device, and/or, according to a distance range corresponding to a distance between the terminal device and the first wireless communication node; and
sending the grade indication information to the first wireless communication node.

39. The method of claim 38, wherein sending the grade indication information to the first wireless communication node, comprises:
in response to the grade indication information being less than or equal to a first grade threshold, sending the grade indication information to the first wireless communication node; or
in response to the grade indication information being greater than or equal to the first grade threshold, sending the grade indication information to the first wireless communication node.

40. The method of claim 39, further comprising:
receiving the first grade threshold sent by the first wireless communication node.

41. The method of claim 28, wherein in a case where the first reference information comprises the switching probability indication information, the method further comprises:
determining the switching probability indication information according to the first result of the terminal device, and/or, according to the location information of the terminal device, and/or, according to the grade indication information of the terminal device; and
sending the switching probability indication information to the first wireless communication node.

42. The method of claim 41, wherein sending the switching probability indication information to the first wireless communication node, comprises:
in response to determining that the switching probability indication information is greater than or equal to a first probability threshold, sending the switching probability indication information to the first wireless communication node; or
in response to determining that the switching probability indication information is less than or equal to the first probability threshold, sending the switching probability indication information to the first wireless communication node.

43. The method of claim 42, further comprising:
receiving the first probability threshold sent by the first wireless communication node.

44. The method of claim 27, further comprising:
receiving first resource configuration information configured by the first wireless communication node for the first signal; and
wherein receiving the first signal sent by the second wireless communication node in the first state comprises:
receiving the first signal sent by the second wireless communication node in the first state according to the first resource configuration information.

45. The method of claim 27, further comprising:
receiving second resource configuration information of the first signal sent by the first wireless communication node, wherein the second resource configuration information is resource configuration information sent by the second wireless communication node to the first wireless communication node; and
receiving the first signal sent by the second wireless communication node in the first state according to the second resource configuration information.

46. The method of claim 27, further comprising:
sending second reference information to the first wireless communication node, wherein the second reference information is used for sending second indication information to the second wireless communication node, the second indication information is configured to indicate that the second wireless communication node is in a second state, and the second state is one of an activated state, an open state, and a communicative state;
wherein the second reference information comprises at least one of following:
a first result of signal measurement of the terminal device;
grade indication information corresponding to the first result;
a second result obtained by measuring the first signal by the terminal device;
grade indication information corresponding to the second result;
switching probability indication information indicating a switching probability of the terminal device switching to the second wireless communication node; or
location information of the terminal device.

47. A communication apparatus, comprising a memory, a transceiver, and a processor; wherein the memory is configured to store computer programs, the transceiver is configured to transmit and receive data under control of the processor, and the processor is configured to read the computer programs stored in the memory and perform:
sending first indication information to a second wireless communication node in a first state, wherein the first state is one of a deactivated state, a closed state, or an incommunicable state, and the first indication information is configured to instruct the second wireless communication node to send a first signal.

48. The apparatus of claim 47, wherein sending the first indication information to the second wireless communication node in the first state, comprises:
sending the first indication information to the second wireless communication node in the first state according to first reference information;
wherein the first reference information comprises at least one of following:
location information of a terminal device connected to the first wireless communication node;
a first result of signal measurement of the terminal device;
grade indication information corresponding to the first result; or
switching probability indication information of the terminal device.

49. A communication apparatus, comprising a memory, a transceiver, and a processor; wherein the memory is configured to store computer programs, the transceiver is configured to transmit and receive data under control of the processor, and the processor is configured to read the computer programs stored in the memory and perform:
receiving first indication information sent by a first wireless communication node to a second wireless communication node in a first state; and
in response to the first indication information, sending a first signal;
wherein the first state is one of a deactivated state, a closed state, or an incommunicable state.

50. The apparatus of claim 49, wherein the first indication information is sent according to first reference information;
wherein the first reference information comprises at least one of following:
location information of a terminal device connected to the first wireless communication node;
a first result of signal measurement of the terminal device;
grade indication information corresponding to the first result; or
switching probability indication information of the terminal device.

51. A communication apparatus, comprising a memory, a transceiver, and a processor;
wherein the memory is configured to store computer programs, the transceiver is configured to transmit and receive data under control of the processor, and the processor is configured to read the computer programs stored in the memory and perform:
receiving a first signal sent by a second wireless communication node in a first state;
wherein the first signal is sent in response to first indication information of a first wireless communication node.

52. The apparatus of claim 51, wherein the first indication information is sent by the first wireless communication node according to first reference information, and the first reference information comprises at least one of following:
location information of the terminal device;
a first result of signal measurement of the terminal device;
grade indication information corresponding to the first result; or
switching probability indication information of the terminal device.

53. An apparatus for sending a signal, comprising:
a first sending unit, configured to send first indication information to a second wireless communication node in a first state, wherein the first state is one of a deactivated state, a closed state, or an incommunicable state, and the first indication information is configured to instruct the second wireless communication node to send a first signal.

54. An apparatus for sending a signal, comprising:
a first receiving unit, configured to receive first indication information sent by a first wireless communication node to a second wireless communication node in a first state; and
a second sending unit, configured to, in response to the first indication information, send a first signal;
wherein the first state is one of a deactivated state, a closed state, or an incommunicable state.

55. An apparatus for sending a signal, comprising:
a second receiving unit, configured to receive a first signal sent by a second wireless communication node in a first state;
wherein the first signal is sent in response to first indication information of a first wireless communication node.

56. A processor-readable storage medium having computer programs stored thereon, wherein the computer programs are used to cause a processor to execute the method described in any one of claims 1-20, the method described in any one of claims 21-26, or the method described in any one of claims 27-46.

57. A computer device, comprising a processor and a memory;
wherein the processor reads computer programs stored in the memory to implement the method described in any one of claims 1-20, the method described in any one of claims 21-26, or the method described in any one of claims 27-46.

58. A computer program product comprising computer programs, wherein when the computer programs are executed by a processor, the method described in any one of claims 1-20, the method described in any one of claims 21-26, or the method described in any one of claims 27-46 is implemented.
